# EUROPÄISCHE PATENTSCHRIFT

(11) **EP 3 416 916 B1**
(45) Veröffentlichungstag und Bekanntmachung des Hinweises auf die Patenterteilung: **09.10.2019**
(21) Anmeldenummer: 17722691.7
(22) Anmeldetag: 13.04.2017
(51) Int. Cl.: C01C 1/04

(54) **NH3 SYNTHESENKONFIGURATION FÜR GROSSANLAGEN**
NH3 SYNTHESIS CONFIGURATION FOR LARGE-SCALE INSTALLATIONS
CONFIGURATION DE LA SYNTHÈSE DE NH3 POUR DE GRANDES INSTALLATIONS

(30) Priorität: 18.04.2016 DE 102016107124
(43) Veröffentlichungstag der Anmeldung: 26.12.2018
(73) Patentinhaber: thyssenkrupp Industrial Solutions AG, 45143 Essen (DE); thyssenkrupp AG, 45143 Essen (DE)
(72) Erfinder: MEISSNER, Christoph, 44135 Dortmund (DE); KINNER, Andreas, 45663 Recklinghausen (DE); NÖLKER, Klaus, 44265 Dortmund (DE); HEUN, Reinhard, 58313 Herdecke (DE)
(74) Vertreter: thyssenkrupp Intellectual Property GmbH
(86) Internationale Anmeldenummer: PCT/EP2017/058933
(87) Internationale Veröffentlichungsnummer: WO 2017/182385

(56) Entgegenhaltungen:
- EP-A2- 0 143 280
- EP-A2- 0 272 448
- US-B2- 7 683 099
- Max Appl ET AL: "Ammonia, 2. Production Processes" In: "Ullmann's Encyclopedia of Industrial Chemistry", 8. November 2012 (2012-11-08), Wiley-VCH, Weinheim, XP055359081, ISBN: 978-3-527-30673-2 DOI: 10.1002/14356007.o02_o11, Abbildung 51
- Dennis Lippmann ET AL: "Uhde dual-pressure process for large-scale ammonia plants", ThyssenKrupp techforum, Juli 2004 (2004-07), Seiten 56-61, XP055385465, Gefunden im Internet: URL:https://www.thyssenkrupp-industrial-so lutions.com/media/download_1/ammonia_2/uhd e_publications_pdf_en_5000002.pdf [gefunden am 2017-06-27]

## Beschreibung

Die Erfindung betrifft ein Verfahren und eine Vorrichtung zur Herstellung von Ammoniak aus einem Synthesegas unter heterogener Gaskatalyse in mindestens zwei hintereinander geschalteten Reaktionsvorrichtungen, wobei jede dieser Reaktionsvorrichtungen jeweils wenigstens zwei Katalysatorbetten umfasst, durch die hindurch das Synthesegas geleitet wird und in denen eine mindestens teilweise Umsetzung zu Produktgas erfolgt, wobei wenigstens ein erster Wärmetauscher in der ersten Reaktionsvorrichtung vorgesehen ist, in dem das frische Synthesegas **A** vorgewärmt wird und wobei ein Kühlen des aus dem ersten Katalysatorbettes austretenden Synthesegases **B** umfassend Produkt und nicht umgesetzte Reaktanden vor dem Eintritt in das zweite Katalysatorbett vorgesehen ist.

Eine Reihe von Produkten in der Grundstoffindustrie, wie z.B. Ammoniak oder Methanol, werden in großtechnischen Gaskatalysen unter Einsatz von Festbettkatalysatoren synthetisiert. Die Synthesen verlaufen in der Regel bei Volumenabnahme unter sehr hohen Arbeitsdrücken bei hohen Arbeitstemperaturen.

Bei der Herstellung von Ammoniak enthält das Synthesegas Wasserstoff und Stickstoff und ggf. zusätzlich Inertgase wie Methan und/oder Edelgase. Bei diesem Verfahren wird üblicherweise zunächst das frische Synthesegas auf einen hohen Druck verdichtet und das verdichtete Synthesegas in einen Kreislauf eingespeist, der durch einen oder mehrere katalysatorgefüllte Reaktoren geführt wird, in denen Ammoniak erzeugt wird. Im Kreislauf ist üblicherweise ein Abscheidesystem vorgesehen, mit dem das erzeugte Ammoniak aus dem Kreislauf in flüssiger Form entnommen wird.

In der industriellen Praxis stoßen Großsynthesen, die üblicherweise als Kreislaufsynthesen ausgeführt werden, in der Auslegung als einsträngige Anlagen jedoch zunehmend an Limitierungen durch Apparate, Maschinen und Rohrleitungen. Geht man beispielsweise bei der Ammoniak-Synthese von einem maximal zulässigen Arbeitsdruck von etwa 230 bara aus, so sind wirtschaftliche Baugrenzen für Druckbehälter und Rohrleitungen absehbar. Will man die Kapazität von Kreislaufsynthesen weiter steigern, ohne die Anzahl der Druckapparate zu erhöhen, so werden technologische Veränderungen notwendig.

Die Ammoniak-Bildungsreaktion ist eine ausgeprägte Gleichgewichtsreaktion, deren Gleichgewichtslage sich mit zunehmender Temperatur immer mehr auf die Seite der Reaktanden verlagert. Im Bereich der üblichen Arbeitstemperaturen der Katalysatorbetten und Arbeitsdrücken von etwa 200 bar werden nur Ammoniak-Gleichgewichtskonzentrationen von 20-25% erreicht. Nach dem Prinzip von Le Chatelier kann durch Erhöhung des Arbeitsdruckes die Gleichgewichtslage zu höheren Ammoniakkonzentrationen verschoben werden. Einer Erhöhung des Synthesedruckes sind aber durch die verfügbaren Verdichter enge Grenzen gesetzt. Des Weiteren wirkt sich die zusätzliche Verdichterarbeit negativ auf den Prozesswirkungsgrad aus und der höhere Arbeitsdruck bedingt größere Wanddicken der Apparate und damit spezifisch höhere Herstellungskosten.

Die Ammoniak-Bildungsreaktion ist stark exotherm, so dass die Temperatur des Prozessgases beim Durchlauf durch das Katalysatorbett fortlaufend zunimmt, wenn keine Wärmeabfuhr vorgenommen wird. Ammoniak-Synthesekonverter mit Bettinnenkühlung wurden vorgeschlagen und in Einzelfällen auch realisiert. Sie sind aber konstruktiv aufwändig und dementsprechend teuer in der Herstellung. Außerdem gestaltet sich die Befüllung und Entnahme des Katalysators ungleich aufwändiger als bei Reaktoren ohne kühlende Einbauten in den Betten.

Als wirtschaftliches Optimum wird deshalb seit einigen Jahrzehnten die Aufteilung der gesamten Katalysatormenge auf drei Einzelbetten und die Rückkühlung des Prozessgases durch zwischen den Betten angesiedelte Wärmetauscher angesehen.

Es wurden bisher verschiedene Lösungen zur Erhöhung der Kapazität insbesondere bestehender Anlagen vorgeschlagen.

DE 100 57 863 A1 offenbart ein Verfahren zur Herstellung von Ammoniak aus Synthesegas, welches außer den Reaktanden Wasserstoff und Stickstoff inerte Bestandteile enthält, in mindestens zwei Reaktionssystemen, wobei die Synthese von Ammoniak aus Synthesegas nacheinander in verschiedenen Synthesesystemen erfolgt, wobei in allen Synthesesystemen aus jeweils einem Teil des Synthesegases Ammoniak erzeugt und davon ein Teil ausgeschleust wird.

DD 225 029 betrifft ein Verfahren zur Synthese von Ammoniak aus inertenhaltigem Synthesegas, welches durch die Verwendung von zwei Reaktionssystemen gekennzeichnet ist. Im ersten Reaktionssystem wird nur frisches Synthesegas umgesetzt. Das nicht umgesetzte Synthesegas wird gemeinsam mit dem Gas eines Synthesekreislaufs zum zweiten Reaktionssystem geführt, wo die weitere Umsetzung zu Ammoniak erfolgt.

Es ist weiterhin Stand der Technik, dass aus energetischen Gründen unmittelbar nach dem Ammoniakreaktor die Abwärme der Reaktion zur Dampferzeugung bzw. zur Kesselspeisewasservorwärmung genutzt wird. Die Abwärme steigt mit der Produktionsmenge an Ammoniak und der Umlaufmenge im Synthesekreislauf an.

Aus dem US-Patent 5,352,428 A ist ein Verfahren zur Herstellung von Ammoniak mit zwei hintereinander geschalteten Reaktionsvorrichtungen, die jeweils zwei Katalysatorbetten umfassen, bekannt. Bei diesem bekannten Verfahren erfolgt die Abkühlung des Produktgasstroms nach dem ersten Katalysatorbett über einen Quenchgasstrom, durch den ein Teilstrom des frischen Feedgases direkt auf das zweite Katalysatorbett geleitet wird. Diese Maßnahme führt zu einer verringerten Ausbeute an Produktgas, denn dieser zu Kühlung verwendete Quenchgasstrom nimmt nicht an der Reaktion im ersten Katalysatorbett teil.

In dem US-Patent 7,683,099 B2 werden Verfahren zur Durchführung von exothermen Gasphasenreaktionen mit heterogener Katalyse beschrieben, bei denen zwei Reaktionsvorrichtungen mit insgesamt drei Katalysatorbetten verwendet werden, wobei in einer der Reaktionsvorrichtungen zwei Katalyatorbetten angeordnet sind. In dieser Druckschrift wird auch eine Variante beschrieben, bei der ein Teilstrom des Produktgases nach dem Durchgang durch das zweite Katalysatorbett abgetrennt, stark abgekühlt und das Ammoniak als Produkt auskondensiert und aus der Anlage abgeführt wird. Ein Teilstrom des stark abgekühlten Gases wird dann in eine zweite Reaktionsvorrichtung geleitet, in der sich ein drittes Katalysatorbett befindet. Nachteilig an dieser Vorgehensweise ist jedoch, dass das Gas vor der Einleitung in das dritte Katalysatorbett wieder aufgewärmt werden muss, um die Reaktion in Gang zu bringen, so dass Wärmeenergie verloren geht. Weiterhin sind die Investitionskosten für diese Variante deutlich höher, da für das Abkühlen und Aufwärmen zusätzliche Equipments erforderlich sind. Somit ist das Verfahren gemäß US-Patent 7,683,099 B2 vergleichsweise unwirtschaftlich.

Die bekannten Verfahren und Vorrichtungen zur Herstellung eines Produkts aus Synthesegas sind jedoch nicht in jeder Hinsicht zufriedenstellend, insbesondere wegen der Erhöhung der Anzahl der Druckapparate für Großanlagen, so dass ein Bedarf an verbesserten Verfahren und Vorrichtungen besteht.

Es ist somit eine Aufgabe der Erfindung, ein vorteilhaftes Verfahren und eine vorteilhafte Vorrichtung zur Herstellung von Ammoniak aus einem Synthesegas mit den eingangs genannten Merkmalen zur Verfügung zu stellen.

Diese Aufgabe wird durch die im Verfahrensanspruch 1 bzw. im Vorrichtungsanspruch 9 genannten Merkmale gelöst. Vorteilhafte Weiterbildungen ergeben sich durch die Merkmale der abhängigen Ansprüche.

Erfindungsgemäß ist vorgesehen, dass das Vorwärmen des frischen Synthesegases **A** in einem ersten Wärmetauscher erfolgt, welcher zwischen dem ersten und dem zweiten Katalysatorbett angeordnet ist.

Die erfindungsgemäße Lösung hat insbesondere den Vorteil, dass man die Abwärme des ersten Katalysatorbettes für das Vorwärmen des frischen Synthesegases verwenden kann und man somit die Nachteile des Quenchstroms vermeidet, welcher in dem US-Patent 5,352,428 vorhanden ist. Der Umsatz der Synthese kann dadurch ohne wesentliche Anhebung der Prozessgasmenge und bei gleichbleibendem Katalysatorvolumen gesteigert werden.

Bei der erfindungsgemäßen Aufteilung der Katalysatorbetten in zwei separate Reaktionsvorrichtungen, vorzugsweise Druckbehälter, ist es zudem möglich, auch eine Dampferzeugung auf zwei Apparate aufzuteilen.

Vorzugsweise erfolgt bei dem erfindungsgemäßen Verfahren das Kühlen des aus dem ersten Katalysatorbett austretenden Synthesegases **B** vor dem Eintritt in das zweite Katalysatorbett mittels des ersten Wärmetauschers, welcher im Strömungsweg hinsichtlich des einen Anteil an Produkt umfassenden Synthesegases **B** zwischen dem ersten und dem zweiten Katalysatorbett angeordnet ist.

Besonders bevorzugt ist gemäß einer Weiterbildung der erfindungsgemäßen Aufgabenlösung vorgesehen, dass der gesamte Feedgasstrom des frischen Synthesegases **A** durch das erste Katalysatorbett und anschließend auch durch das zweite Katalysatorbett hindurch geleitet wird. Dies hat den Vorteil, dass der gesamte Feedgasstrom des frischen Synthesegases an der Reaktion in beiden Katalysatorbetten der ersten Reaktionsvorrichtung teilnimmt. Das Abzweigen eines Quenchgasstroms für die Kühlung des Synthesegasstroms **B** nach dem ersten Katalysatorbett, wie im Stand der Technik vorgesehen, führt demgegenüber zu einem Ausbeuteverlust, da dieser Anteil nicht durch das erste Katalysatorbett geleitet wird.

Die Erfindung sieht vor, dass ein im Strömungsweg zwischen der ersten Reaktionsvorrichtung (1) und der zweiten Reaktionsvorrichtung (3) angeordneter Zwischenwärmetauscher (2-1) vorgesehen ist und der aus dem zweiten Katalysatorbett (1-B) austretende heiße Produktgasstrom ohne vorherige Abkühlung zur Erzeugung von Dampf in dem Zwischenwärmetauscher (2-1) genutzt wird. Durch diese Maßnahme wird die gesamte in dem heißen Produktgasstrom enthaltene Wärmeenergie zur Erzeugung von Dampf genutzt, so dass eine größere Dampfmenge erzeugt werden kann.

Die Erfindung sieht weiter vor, dass eine Abkühlung des Prozessgasstroms **D** in dem Zwischenwärmetauscher (2-1) unter die für ein nachfolgendes drittes Katalysatorbett (3-A) erforderliche Eintrittstemperatur, und ggf. auch unter die Temperatur des erzeugten Dampfes zur größtmöglichen Nutzung der Energie des Stroms **D**, erfolgt, um in einem nachgeschalteten Schritt den Prozessgasstrom mithilfe eines weiteren Wärmetauschers (3-2), welcher gleichzeitig als Zwischenkühler zwischen dem dritten Katalysatorbett und einem vierten Katalysatorbett dient, wieder auf eine definierte optimale Prozesstemperatur für das Katalysatorbett (3-B) zu bringen. Dies ermöglicht eine optimale Temperaturführung über alle Katalysatorbetten.

Das erfindungsgemäße Verfahren zur Herstellung von Ammoniak kann beispielsweise die folgenden Schritte umfassen:
a) Bereitstellen eines frischen Synthesegases **A** umfassend Reaktanden und ggf. inerte Komponenten;
b) Synthese von Produkt aus Reaktanden, welche in dem Synthesegas **A** enthalten sind, unter heterogener Gaskatalyse in einer ersten Reaktionsvorrichtung (1), umfassend die Schritte:
   b₁)ggf. Vorwärmen des frischen Synthesegases **A** in einem ersten Vorwärmetauscher (1-1);
   b₂) Wärmen des frischen Synthesegases **A** in einem ersten Wärmetauscher (1-2);
   b₃) Leiten des frischen Synthesegases **A** über ein erstes Katalysatorbett (1-A) unter Bildung eines Synthesegases **B** umfassend Produkt und nicht umgesetzte Reaktanden;
   b₄) Kühlen des Synthesegases **B** in dem ersten Wärmetauscher (1-2);
   b₅) Leiten des Synthesegases **B** über ein zweites Katalysatorbett (1-B) unter Bildung eines Synthesegases **C** umfassend Produkt und nicht umgesetzte Reaktanden;
   b₆) ggf. Kühlen des Synthesegases **C** in einem zweiten Wärmetauscher (1-3) oder in dem ersten Vorwärmetauscher (1-1); und Leiten des Synthesegases **C** über ein drittes Katalysatorbett (1-C) unter Bildung eines Synthesegases **D** umfassend Produkt und nicht umgesetzte Reaktanden;
   b₇) Ausleiten des Synthesegases. **D** aus der ersten Reaktionsvorrichtung (1);
c) Kühlen zumindest eines Teils des Synthesegases **D** in einem ersten Zwischenwärmetauscher (2-1); ggf. Kühlen zumindest eines Teils des Synthesegases. **D** in einem zweiten Zwischenwärmetauscher (2-2);
d) Synthese von Produkt aus Reaktanden, welche in dem Synthesegas **D** enthalten sind, unter heterogener Gaskatalyse in einer zweiten Reaktionsvorrichtung (3), umfassend die Schritte:
   d₁) ggf. Vorwärmen des Synthesegases **E** in einem zweiten Vorwärmetauscher (3-1);
   d₂) Wärmen des Synthesegases **E** in einem dritten Wärmetauscher (3-2);
   d₃) Leiten des Synthesegases **E** über ein drittes Katalysatorbett (3-A) unter Bildung eines Synthesegases **E** umfassend Produkt und nicht umgesetzte Reaktanden;
   d₄) Kühlen des Synthesegases **F** in dem dritten Wärmetauscher (3-2);
   d₅) Leiten des Synthesegases **F** über ein viertes Katalysatorbett (3-B) unter Bildung eines Synthesegases **F** umfassend Produkt und nicht umgesetzte Reaktanden;
   d₆) ggf. Kühlen des Synthesegases **G** in einem vierten Wärmetauscher (3-3) oder in dem zweiten Vorwärmetauscher (3-1); und Leiten des Synthesegases **G** über ein weiteres Katalysatorbett (3-C) unter Bildung eines Synthesegases **H** umfassend Produkt und nicht umgesetzte Reaktanden;
   d₇) Ausleiten des Synthesegases **H** aus der zweiten Reaktionsvorrichtung (3); und
e) Kühlen zumindest eines Teils des Synthesegases **H** in einem ersten Nachwärmetauscher (4-1); sowie ggf. Kühlen zumindest eines Teils des Synthesegases **H** in einem zweiten Nachwärmetauscher (4-2).

Bevorzugt verlässt in Schritt c) das Synthesegas **D** den Zwischenwärmetauscher (2-1) bei einer Temperatur T_{A}; und in Schritt d₃) tritt das Synthesegas **E** in das dritte Katalysatorbett (3-A) bei einer Temperatur T_{E} ein; wobei die Temperatur T_{E} um mindestens 30°C, bevorzugt um mindestens 50°C größer ist als die Temperatur T_{A}. Diese Temperaturdifferenz wird anschließend ggf. durch Vorwärmen in Schritt d₁) und Wärmen in Schritt d₂) ausgeglichen. Bevorzugt liegt dabei T_{E} im Bereich von 360°C bis 430°C, bevorzugt im Bereich von 380°C bis 420°C.

Es wurde überraschend gefunden, dass durch dieses Kühlen des Synthesegases zwischen der ersten Reaktionsvorrichtung und der zweiten Reaktionsvorrichtung eine signifikant bessere Annäherung an die Gleichgewichtskurve der Ammoniak-Bildungsreaktion ermöglicht wird, als dies bei herkömmlichen Vorrichtungen der Fall ist, bei denen häufig drei Katalysatorbetten in einer einzelnen Reaktionsvorrichtung angeordnet sind, welche auch als gemeinsamer Druckbehälter dient.

Ein vergrößerter Zwischenkühler entnimmt dem Prozessgas mehr Wärme, welche dann zur Kesselspeisewasservorwärmung und/oder Dampfproduktion genutzt werden kann. Durch Wiederaufwärmen des Prozessgases in einem weiteren Wärmetauscher wird die optimale Eintrittstemperatur in das nachfolgende Katalysatorbett wiederhergestellt. Mit dem eintretenden Gas in das dritte Katalysatorbett, kann wiederrum das austretende Prozessgas aus dem dritten Katalysatorbett gekühlt werden. Hierdurch kann auch für das nachfolgende vierte Katalysatorbett die Eintrittstemperatur optimal eingestellt werden, woraus ein gesteigerter Umsatz resultiert.

Es hat sich überraschend gezeigt, dass die Mehrkosten für eine gegebenenfalls notwendige Vergrößerung des Zwischenkühlers und der Einbringung einer Zwischenkühlung in die zweite Reaktionsvorrichtung geringer sind, als die Kosten für zusätzlichen Katalysator, um den gleichen Umsatz ohne Zwischenkühlung zu erreichen. Dadurch ist das erfindungsgemäße Verfahren günstiger als der jetzige Stand der Technik.

Bevorzugt umfassen die Reaktanden im frischen Synthesegas **A** Wasserstoff und Stickstoff im molaren Verhältnis von 2,0-4,0 : 1,0.

Das Synthesegas **E** wird im dritten Wärmetauscher (3-2) abgekühlt, um einen höheren Umsatz im vierten Katalysatorbett (3-B) zu erreichen. Die abgeführte Wärme aus dem Synthesegas **F** im dritten Wärmetauscher wird dem Synthesegas **E** zugeführt. Um eine optimale Eintrittstemperatur ins dritte Katalysatorbett zu erreichen, muss das Synthesegas **D** im ersten Zwischenwärmetauscher weiter heruntergekühlt werden als in vorangegangenen Konzepten. Durch die größere Abkühlung des Synthesegases **D** ist es möglich, im ersten Zwischenwärmetauscher mehr Dampf zu erzeugen, was die Energieeffizienz des Prozesses insgesamt steigert.

Durch geeignete Wahl der Reaktionsbedingungen und der Aufteilung des Katalysatorvolumens ist es möglich, die Wärmemenge auf beide Dampferzeuger (2-1 bzw- 4-1) annähernd gleich zu verteilen. Somit kann vermieden werden, dass die Maximalgröße von Neuanlagen durch die Dampferzeuger beschränkt wird.

In Schritt (a) des erfindungsgemäßen Verfahrens wird ein frisches Synthesegas **A** umfassend Reaktanden und ggf. inerte Komponenten bereitgestellt. Die inerten Komponenten sind dabei im Hinblick auf die Synthese des Produkts inert. Die Zusammensetzung des frischen Synthesegases **A** ist von der Art des Produkts abhängig. Im Falle des bevorzugten Produktes Ammoniak umfassen die inerten Komponenten bevorzugt Edelgase, insbesondere Argon, sowie Kohlenwasserstoffe, insbesondere Methan. Das frische Synthesegas **A** kann aus unterschiedlichen Quellen stammen, wobei Erdgas als Quelle bevorzugt ist. Bezüglich der Einzelheiten zur Bereitstellung von Synthesegas wird beispielsweise vollumfänglich verwiesen auf A. Nielsen, I. Dybkjaer, Ammonia - Catalysis and Manufacture, Springer Berlin 1995, Kapitel 6, Seiten 202-326.

In einer bevorzugten Ausführungsform wird das in Schritt (a) bereitgestellte frische Synthesegas **A** durch Reformierung von Kohlenwasserstoffen hergestellt wird, wobei die Reformierung in einem Dampfreformer, in einem gasbeheizten Reformer, in einem autothermen Reformer oder durch partielle Oxidation erfolgt oder das frische Synthesegas A wird durch Elektrolyse von Wasser und Luftzerlegung hergestellt. Bevorzugt wird bei der Reformierung Erdgas, Wasser in Form von Dampf und Luft bzw. Sauerstoff eingesetzt. Der volumenanteilige Hauptbestandteil des Synthesegases ist bevorzugt Wasserstoff, wobei der Stickstoffanteil ggf. auch relativ hoch sein kann, abhängig davon, ob bei der Herstellung Luft, mit Sauerstoff angereicherte Luft oder sogar reiner Sauerstoff eingesetzt wurde.

Das in Schritt (a) bereitgestellte frische Synthesegas **A** kann bereits herkömmlichen Aufarbeitungsmaßnahmen unterzogen worden sein, wie z.B. Heliumentfernung, Erdgasentschwefelung, Konvertierung von Kohlenmonoxid zu Kohlendioxid und Kohlendioxidentfernung. Auch nach Durchführung dieser Aufbereitungsmaßnahmen kann das frische Synthesegas **A** neben Wasserstoff und Stickstoff ggf. weitere, insbesondere inerte Komponenten umfassen.

Das Synthesegas **A** kann vorzugsweise frisch sein, d.h. es kann erfindungsgemäß bevorzugt zuvor aus keiner vorgeschalteten Kreislaufsynthese als Spülgasstrom ausgeschleust worden sein.

Das in Schritt (a) bereitgestellte frische Synthesegas **A** kann ggf. bereits komprimiert sein, vorzugsweise auf einen Druck im Bereich von 50 bis 400 bara, bevorzugter auf einen Druck im Bereich von 170 bis 230 bara. Ebenso bevorzugt wird das in Schritt (a) bereitgestellte frische Synthesegas **A** in einem oder mehreren geeigneten Verdichtern auf einen Druck im Bereich von 50 bis 400 bara verdichtet, bevorzugter auf einen Druck im Bereich von 170 bis 230 bara.

In Schritt (b) des erfindungsgemäßen Verfahrens wird Produkt aus Reaktanden synthetisiert, welche in dem Synthesegas **A** enthalten sind, unter heterogener Gaskatalyse in einer ersten Reaktionsvorrichtung, umfassend beispielsweise die Schritte:
b₁) ggf. Vorwärmen des frischen Synthesegases **A** in einem ersten Vorwärmetauscher (1-1);
b₂) Wärmen des frischen Synthesegases **A** in einem ersten Wärmetauscher (1-2);
b₃) Leiten des frischen Synthesegases **A** über ein erstes Katalysatorbett (1-A) unter Bildung eines Synthesegases **B** umfassend Produkt und nicht umgesetzte Reaktanden;
b₄) Kühlen des Synthesegases **B** in dem ersten Wärmetauscher (1-2);
b₅) Leiten des Synthesegases **B** über ein zweites Katalysatorbett (1-B) unter Bildung eines Synthesegases **C** umfassend Produkt und nicht umgesetzte Reaktanden;
b₆) ggf. Kühlen des Synthesegases **C** in einem zweiten Wärmetauscher (1-3) oder in dem ersten Vorwärmetauscher (1-1); und Leiten des Synthesegases **C** über ein drittes Katalysatorbett (1-C) unter Bildung eines Synthesegases **D** umfassend Produkt und nicht umgesetzte Reaktanden; und
b₇) Ausleiten des Synthesegases **D** aus der ersten Reaktionsvorrichtung (1).

Die Technologie der Synthese ist von der Art des Produkts abhängig. Reaktoren und Katalysatoren zur Gasphasenreaktion bei hohem Druck unter heterogener Gaskatalyse sind einem Fachmann bekannt. Im Hinblick auf die erfindungsgemäß bevorzugte Synthese von Ammoniak als Produkt wird beispielsweise ebenfalls vollumfänglich verwiesen auf A. Nielsen, I. Dybkjaer, Ammonia - Catalysis and Manufacture, Springer Berlin 1995, Kapitel 6, Seiten 202-326.

Bevorzugt erfolgt die Synthese von Produkt in Schritt (b) in einer einzelnen Reaktionsvorrichtung (1), welche bevorzugt als Druckbehälter ausgebildet ist. Das frische Synthesegas **A** wird bevorzugt am Kopfende in die Reaktionsvorrichtung (1) eingeleitet. Nach dem Einleiten in die Reaktionsvorrichtung wird das frische Synthesegas **A** in einem ersten Wärmetauscher (1-2) und ggf. zuvor ggf. in einem ersten Vorwärmetauscher (1-1) gewärmt, bevorzugt um mindestens 20°C, bevorzugter um mindestens 40°C.

Anschließend wird das frische Synthesegas **A** über ein erstes Katalysatorbett (1-A) unter Bildung eines Synthesegases **B** umfassend Produkt und nicht umgesetzte Reaktanden geleitet. Bevorzugt wird das erste Katalysatorbett (1-A) von dem frischen Synthesegas **A** vorwiegend radial durchströmt, vorzugsweise von außen nach innen, wodurch die thermische Belastung des Druckbehälters reduziert wird. Die Wahl des Katalysators ist von der Art des Produkts abhängig. Im Hinblick auf die erfindungsgemäß bevorzugte Synthese von Ammoniak als Produkt sind beispielsweise Magnetit- oder Rutheniumkatalysatoren geeignet, welche ggf. mit weiteren Komponenten versetzt sein können.

Anschließend wird das Synthesegas **B** in dem ersten Wärmetauscher (1-2) gekühlt, bevorzugt um mindestens 20°C, bevorzugter um mindestens 40°C. Bevorzugt wird dabei zumindest ein Teil der Wärme des Synthesegases **B** auf das frische Synthesegas **A** übertragen. Die Beschaffenheit des ersten Wärmetauschers (1-2) ist erfindungsgemäß nicht eingeschränkt. In einer bevorzugten Ausführungsform ist der erste Wärmetauscher (1-2) als Geradrohrwärmetauscher mit Zentralrohr ausgebildet. Ein Geradrohrwärmetauscher ist eine Bauform eines Rohrbündelwärmetauschers. Bei Geradrohr-Wärmetauschern werden viele dünne Einzelrohre gerade durch ein großes Rohr geführt. Er kann sowohl im Gleichstromprinzip als auch im Gegenstromprinzip betrieben werden. Der Geradrohrwärmetauscher ist vor allem dadurch gekennzeichnet, dass er im Betrieb nur einen sehr geringen Druckverlust erzeugt.

Erfindungsgemäß bevorzugt sind
- der ggf. vorhandene erste Vorwärmetauscher (1-1); und/oder
- der erste Wärmetauscher (1-2); und/oder
- der ggf. vorhandene zweite Wärmetauscher (1-3); und/oder
- der erste Zwischenwärmetauscher (2-1); und/oder
- der ggf. vorhandene zweite Vorwärmetauscher (3-1); und/oder
- der dritte Wärmetauscher (3-2); und/oder
- der ggf. vorhandene vierte Wärmetauscher(3-3); und/oder
- der erste Nachwärmetauscher (4-1)
jeweils unabhängig voneinander als Geradrohr-, U-Rohr oder Plattenwärmetauscher ausgebildet.

Anschließend wird das Synthesegas **B** über ein zweites Katalysatorbett (1-B) unter Bildung eines Synthesegases **C** umfassend Produkt und nicht umgesetzte Reaktanden geleitet. Bevorzugt wird das zweite Katalysatorbett (1-B) von dem Synthesegas **B** vorwiegend radial durchströmt, vorzugsweise von außen nach innen. Die Wahl des Katalysators ist von der Art des Produkts abhängig. Im Hinblick auf die erfindungsgemäß bevorzugte Synthese von Ammoniak als Produkt sind beispielsweise Magnetit- oder Rutheniumkatalysatoren geeignet, welche ggf. mit weiteren Komponenten versetzt sein können.

In einer möglichen Ausführungsform wird anschließend das Synthesegas **C** über ein drittes Katalysatorbett (1-C) unter Bildung eines Synthesegases **D** umfassend Produkt und nicht umgesetzte Reaktanden geleitet. Bevorzugt wird das dritte Katalysatorbett (1-C) von dem Synthesegas **C** vorwiegend radial durchströmt, vorzugsweise von außen nach innen. Die Wahl des Katalysators ist von der Art des Produkts abhängig. Im Hinblick auf die erfindungsgemäß bevorzugte Synthese von Ammoniak als Produkt sind beispielsweise Magnetit- oder Rutheniumkatalysatoren geeignet, welche ggf. mit weiteren Komponenten versetzt sein können.

Sofern in dem erfindungsgemäßen Verfahren ein erster Vorwärmetauscher (1-1) zum Einsatz kommt, so wird dieser bevorzugt auch in Schritt b₆) zum Kühlen des Synthesegases **D** eingesetzt.

Das erste Katalysatorbett (1-A), das zweite Katalysatorbett (1-B) sowie das ggf. vorhandene dritte Katalysatorbett (1-C) befinden sich in der ersten Reaktionsvorrichtung (1) und sind bevorzugt übereinander angeordnet, wobei das erste Katalysatorbett (1-A) bevorzugt oberhalb des zweiten Katalysatorbettes (1-B) angeordnet ist, welches wiederum bevorzugt oberhalb des ggf. vorhandenen dritten Katalysatorbetts (1-C) angeordnet ist.

Das Synthesegas **D** wird bevorzugt am Fußende aus der ersten Reaktionsvorrichtung (1) ausgeleitet.

In Schritt (c) des erfindungsgemäßen Verfahrens wird bevorzugt zumindest ein Teil des Synthesegases **D** in einem ersten Zwischenwärmetauscher (2-1) gekühlt. Bevorzugt werden mindestens 50 Vol.-% des Synthesegases **D** in dem ersten Zwischenwärmetauscher (2-1) gekühlt, bevorzugter mindestens 60 Vol.-%, mindestens 70 Vol.-%, mindestens 80 Vol.-% oder mindestens 90 Vol.-%. Bevorzugt wird zumindest ein Teil des Synthesegases **D** in Schritt (c) um mindestens 20°C gekühlt, bevorzugter um mindestens 30°C, mindestens 40°C, mindestens 50°C, mindestens 60°C, mindestens 80°C oder mindestens 100°C.

Die Abkühlung ist erforderlich, um für den folgenden Schritt (d) geeignete Eintrittstemperaturen des Synthesegases **D** in das dritte, vierte und ggf. vorhandene weitere Katalysatorbetten (3-A, 3-B und ggf. 3-C) mithilfe des dritten Wärmetauschers (3-2) einstellen zu können. Diese Temperaturdifferenz wird ggf. durch Vorwärmen in Schritt d₁) und Wärmen in Schritt d₂) ausgeglichen. Höhere Umsätze bzw. Anlagenkapazitäten wären somit ohne diesen Schritt nicht kosteneffizient realisierbar.

In einer möglichen Ausführungsform ist dem ersten Zwischenwärmetauscher (2-1) ein zweiter Zwischenwärmetauscher nachgeschaltet.

In Schritt (d) des erfindungsgemäßen Verfahrens wird Produkt aus Reaktanden synthetisiert, welche in dem Synthesegas **D** enthalten sind, unter heterogener Gaskatalyse in einer zweiten Reaktionsvorrichtung, umfassend die Schritte:
d₁) ggf. Vorwärmen des Synthesegases **E** in einem zweiten Vorwärmetauscher;
d₂) Wärmen des Synthesegases **E** in einem dritten Wärmetauscher;
d₃) Leiten des Synthesegases **E** über ein drittes Katalysatorbett unter Bildung eines Synthesegases **F** umfassend Produkt und nicht umgesetzte Reaktanden;
d₄) Kühlen des Synthesegases **F** in dem dritten Wärmetauscher;
d₅) Leiten des Synthesegases **F** über ein viertes Katalysatorbett unter Bildung eines Synthesegases **G** umfassend Produkt und nicht umgesetzte Reaktanden;
d₆) ggf. Kühlen des Synthesegases **G** in einem vierten Wärmetauscher oder in dem zweiten Vorwärmetauscher und Leiten des Synthesegases **G** über ein weiteres Katalysatorbett unter Bildung eines Synthesegases **H** umfassend Produkt und nicht umgesetzte Reaktanden; und
d₇) Ausleiten des Synthesegases **H** aus der zweiten Reaktionsvorrichtung.

Bevorzugt erfolgt die Synthese von Produkt in Schritt (d) in einer einzelnen Reaktionsvorrichtung (3), welche bevorzugt als Druckbehälter ausgebildet ist. Das Synthesegas **E** wird bevorzugt am Kopfende in die zweite Reaktionsvorrichtung (3) eingeleitet. Nach dem Einleiten in die zweite Reaktionsvorrichtung wird das Synthesegas **E** in einem dritten Wärmetauscher (3-2) gewärmt, bevorzugt um mindestens 20°C, bevorzugter um mindestens 40°C.

Anschließend wird das Synthesegas **E** über ein drittes Katalysatorbett unter Bildung eines Synthesegases **F** umfassend Produkt und nicht umgesetzte Reaktanden geleitet. Bevorzugt wird das dritte Katalysatorbett (3-A) von dem Synthesegas **E** vorwiegend radial durchströmt, vorzugsweise von außen nach innen. Die Wahl des Katalysators ist von der Art des Produkts abhängig. Im Hinblick auf die erfindungsgemäß bevorzugte Synthese von Ammoniak als Produkt sind beispielsweise Magnetit- oder Rutheniumkatalysatoren geeignet, welche ggf. mit weiteren Komponenten versetzt sein können.

Anschließend wird das Synthesegas **F** in dem dritten Wärmetauscher (3-2) gekühlt, bevorzugt um mindestens 20°C, bevorzugter um mindestens 40°C. Bevorzugt wird dabei zumindest ein Teil der Wärme des Synthesegases **F** auf das Synthesegas **E** übertragen. Die Beschaffenheit des dritten Wärmetauschers (3-2) ist erfindungsgemäß nicht eingeschränkt. In einer bevorzugten Ausführungsform ist der dritte Wärmetauscher als Geradrohrwärmetauscher mit Zentralrohr ausgebildet.

Anschließend wird das Synthesegas **F** über ein viertes Katalysatorbett (3-B) unter Bildung eines Synthesegases **G** umfassend Produkt und nicht umgesetzte Reaktanden geleitet. Bevorzugt wird das vierte Katalysatorbett (3-B) von dem Synthesegas **F** vorwiegend radial durchströmt, vorzugsweise von außen nach innen. Die Wahl des Katalysators ist von der Art des Produkts abhängig. Im Hinblick auf die erfindungsgemäß bevorzugte Synthese von Ammoniak als Produkt sind beispielsweise Magnetit- oder Rutheniumkatalysatoren geeignet, welche ggf. mit weiteren Komponenten versetzt sein können.

In einer bevorzugten Ausführungsform wird anschließend das Synthesegas **G** über mindestens ein weiteres Katalysatorbett (3-C) unter Bildung eines Synthesegases **H** umfassend Produkt und nicht umgesetzte Reaktanden geleitet. Bevorzugt wird das weitere Katalysatorbett von dem Synthesegas **G** vorwiegend radial durchströmt, vorzugsweise von außen nach innen. Die Wahl des Katalysators ist von der Art des Produkts abhängig. Im Hinblick auf die erfindungsgemäß bevorzugte Synthese von Ammoniak als Produkt sind beispielsweise Magnetit- oder Rutheniumkatalysatoren geeignet, welche ggf. mit weiteren Komponenten versetzt sein können.

Sofern in dem erfindungsgemäßen Verfahren ein zweiter Vorwärmetauscher zum Einsatz kommt, so wird dieser bevorzugt auch in Schritt d₆) zum Kühlen des Synthesegases **G** eingesetzt.

Das dritte Katalysatorbett (3-A), das vierte Katalysatorbett (3-B) sowie das ggf. vorhandene weitere Katalysatorbett (3-C) befinden sich in der zweiten Reaktionsvorrichtung (3) und sind bevorzugt übereinander angeordnet, wobei das dritte Katalysatorbett (3-A) bevorzugt oberhalb des vierten Katalysatorbettes (3-B) angeordnet ist, welches wiederum bevorzugt oberhalb des ggf. vorhandenen weiteren Katalysatorbetts (3-C) angeordnet ist.

Das Synthesegas **H** wird bevorzugt am Fußende aus der zweiten Reaktionsvorrichtung (3) ausgeleitet.

In Schritt (e) des erfindungsgemäßen Verfahrens wird zumindest ein Teil des Synthesegases **H** in einem ersten Nachwärmetauscher (4-1) gekühlt. Bevorzugt werden mindestens 50 Vol.-% des Synthesegases **H** in dem ersten Nachwärmetauscher gekühlt, bevorzugter mindestens 60 Vol.-%, mindestens 70 Vol.-%, mindestens 80 Vol.-% oder mindestens 90 Vol.-%. Bevorzugt wird zumindest ein Teil des Synthesegases **H** in Schritt (e) um mindestens 20°C gekühlt, bevorzugter um mindestens 30°C, mindestens 40°C, mindestens 50°C, mindestens 60°C, mindestens 80°C oder mindestens 100°C.

In einer bevorzugten Ausführungsform ist dem ersten Nachwärmetauscher (4-1) ein zweiter Nachwärmetauscher nachgeschaltet.

In einer bevorzugten Ausführungsform wird die im
ersten Zwischenwärmetauscher (2-1) und ggf. vorhandenen zweiten Zwischenwärmetauscher; und/oder
im ersten Nachwärmetauscher (4-1) und ggf. vorhandenen zweiten Nachwärmetauscher
abgeführte Wärme bevorzugt zur Bildung von Dampf eingesetzt, wobei der Dampf, vorzugsweise Hochdruckdampf entweder in dem erfindungsgemäßen Verfahren oder in jedem anderen Verfahren eingesetzt werden kann.

Bevorzugt wird in den
ersten Zwischenwärmetauscher (2-1) und ggf. vorhandenen zweiten Zwischenwärmetauscher; und/oder
im ersten Nachwärmetauscher (4-1) und ggf. vorhandenen zweiten Nachwärmetauscher
Wasser eingeleitet wird, welches bevorzugt zuvor temperiert wurde.

Bevorzugt wird dabei Wasser und/oder Dampf eingeleitet, welches zuvor auf eine Temperatur im Bereich von 20 bis 220°C temperiert wurde, bevorzugter auf eine Temperatur im Bereich von 140 bis 220°C. In einer bevorzugten Ausführungsform wird zumindest ein Teil des Synthesegas **D** im ersten Zwischenwärmetauscher (2-1) und/oder zumindest ein Teil des Synthesegases **H** im ersten Nachwärmetauscher (4-1) um mindestens 50°C gekühlt, bevorzugter um mindestens 70°C, mindestens 90°C oder mindestens 100°C.

In einer bevorzugten Ausführungsform wird nach Schritt (e) zumindest ein Teil des Synthesegases **H** in einem Kreislauf geführt und mit dem in Schritt (a) bereitgestellten frischen Synthesegas **A** vermischt. Bevorzugt werden nach Schritt (e) mindestens 50 Vol.-% des Synthesegases **F** bzw. **G** in einem Kreislauf geführt, bevorzugter mindestens 60 Vol.-%, mindestens 70 Vol.-%, mindestens 80 Vol.-% oder mindestens 90 Vol.-%. Durch das Führen zumindest eines Teils des Synthesegases **H** in einem Kreislauf wird ein Synthesekreislauf gebildet, in welchem sich ggf. inerte Komponenten anreichern können. Ein zu hoher Anteil an inerten Komponenten im Synthesegas ist jedoch nachteilig, da dadurch der Partialdruck der Reaktanden und damit die Ausbeute an Produkt verringert werden. Bevorzugt wird der Anteil an dem Synthesegas **H**, welcher in einem Kreislauf geführt wird, so gewählt, dass der Anteil an inerten Komponenten in dem Synthesekreislauf höchstens 20 Vol.-% beträgt, bevorzugter höchstens 15 Vol.-%.

Gemäß einer bevorzugten Weiterbildung der Erfindung ist wenigstens ein weiterer Wärmetauscher (3-2), der von dem in das dritte Katalysatorbett (3-A) eintretenden Synthesegas durchströmt wird, um dieses vorzuwärmen, in der zweiten Reaktionsvorrichtung (3) zwischen dem dritten Katalysatorbett (3-A) und dem vierten Katalysatorbett (3-B) angeordnet und dieser weitere Wärmetauscher (3-2) dient gleichzeitig dazu, das in das vierte Katalysatorbett (3-B) eintretende Synthesegas **F** abzukühlen.

In dem erfindungsgemäßen Verfahren können niedrigere Umlaufraten im Synthesekreislauf erzielt werden, und folglich kann dadurch die Vorrichtung zur Herstellung eines Produkts insgesamt kleiner ausgeführt werden bzw. erzielt bei gleicher Größe einen höheren Umsatz. Aufgrund der zusätzlichen Vorwärmung des Synthesegases **E** im dritten Wärmetauscher (3-2) der zweiten Reaktionsvorrichtung (3) und den ggf. vorhandenen zweiten Vorwärmetauscher ist es möglich, dass Synthesegas **E** im ersten Zwischenwärmetauscher (2-1) nach dem Austritt aus der ersten Reaktionsvorrichtung (1) weiter abzukühlen als dies bei konventionellen Verfahren üblich ist.

Somit ist es möglich, in dem erfindungsgemäßen Verfahren im Vergleich zu konventionellen Verfahren mehr Dampf zu erzeugen, welcher in dem erfindungsgemäßen Verfahren bzw. in jedem anderen Verfahren verwendet werden kann. Zudem ist es durch zusätzliche Zwischenkühlungen möglich, höhere Umsätze zu erreichen, ohne dabei die Gesamtmenge an Katalysator zu erhöhen.

Es ist Stand der Technik, dass ebenfalls vier Katalysatorbetten verbaut werden, in der Regel jedoch ohne eine Zwischenkühlung zur Dampferzeugung und/oder zur Kesselspeisewasservorwärmung. Die Variante ohne Zwischenkühlung zur Dampferzeugung ist in der Regel weniger energieeffizient als mit Zwischenkühlung.

In einer bevorzugten Ausführungsform erfolgt die Synthese in einem Maßstab, welcher eine Tagesproduktion von mindestens 1.800 t Produkt übersteigt, bevorzugter eine Tagesproduktion von mindestens 2.500 t Produkt oder von mindestens 3.000 t Produkt.

Ein weiterer Aspekt der Erfindung betrifft eine Vorrichtung zur Herstellung von Ammoniak aus einem Synthesegas **A** unter heterogener Gaskatalyse, insbesondere zur Verwendung in einem Verfahren der zuvor beschriebenen Art, wobei die Vorrichtung die folgenden miteinander in Wirkverbindung stehenden Komponenten umfasst:

eine erste Reaktionsvorrichtung (1) umfassend:
a) ein erstes Katalysatorbett (1-A) konfiguriert zur Bildung eines Synthesegases **B** umfassend Produkt und nicht umgesetzte Reaktanden aus einem frischen Synthesegas **A**;
b) einen ersten Wärmetauscher (1-2) konfiguriert zum Wärmen des frischen Synthesegases **A** vor Eintritt in das erste Katalysatorbett (1-A) und zum Kühlen eines Synthesegases **B** nach dem Austritt aus dem ersten Katalysatorbett (1-A);
c) ein zweites Katalysatorbett (1-B) konfiguriert zur Bildung eines Synthesegases **D** umfassend Produkt und nicht umgesetzte Reaktanden aus dem Synthesegas **B**;
d) Mittel konfiguriert zum Ausleiten des Synthesegases **D** aus der ersten Reaktionsvorrichtung (1);

einen Zwischenwärmetauscher (2-1) konfiguriert zum Kühlen zumindest eines Teils des Synthesegases **D**;

eine zweite Reaktionsvorrichtung (3) umfassend:
a) ein drittes Katalysatorbett (3-A) konfiguriert zur Bildung eines Synthesegases **F** umfassend Produkt und nicht umgesetzte Reaktanden aus dem Synthesegases **E**;
b) einen dritten Wärmetauscher (3-2) konfiguriert zum Wärmen des Synthesegases **E** vor Eintritt in das dritte Katalysatorbett (3-A) und zum Kühlen des Synthesegases **F** nach dem Austritt aus dem dritten Katalysatorbett (3-A);
c) ein viertes Katalysatorbett (3-B) konfiguriert zur Bildung eines Synthesegases **H** umfassend Produkt und nicht umgesetzte Reaktanden aus dem Synthesegas **F**;
d) Mittel konfiguriert zum Ausleiten des Synthesegases **H** aus der zweiten Reaktionsvorrichtung (3); und

einen Nachwärmetauscher (4-1) konfiguriert zum Kühlen zumindest eines Teils des Synthesegases **H**, wobei erfindungsgemäß der erste Wärmetauscher (3-2) konzentrisch radial innerhalb des ersten Katalysatorbetts (3-A) angeordnet ist und/oder der dritte Wärmetauscher (3-3) konzentrisch radial innerhalb des dritten Katalysatorbetts (3-B) angeordnet ist.;

Die Komponenten der erfindungsgemäßen Vorrichtung stehen miteinander in Wirkverbindung, d.h. sind durch geeignete Rohrleitungen etc. miteinander in einer Weise verbunden, welche die allgemeine Funktionsfähigkeit der Vorrichtung gewährleistet. Die dafür erforderlichen Maßnahmen sind einem Fachmann bekannt.

Alle bevorzugten Ausführungsformen, welche vorstehend im Zusammenhang mit dem erfindungsgemäßen Verfahren zur Herstellung eines Produkts beschrieben wurden, gelten analog auch für die erfindungsgemäße Vorrichtung zur Herstellung eines Produkts und werden daher nicht wiederholt.

Die erste (1) und/oder die zweite Reaktionsvorrichtung (3) umfasst bevorzugt einen im Wesentlichen zylindrischen Behälter mit einer vertikalen Längsachse. Reaktoren zur Gasphasenreaktion bei hohem Druck sind einem Fachmann bekannt. Im Hinblick auf die erfindungsgemäße Synthese von Ammoniak wird beispielsweise verwiesen auf A. Nielsen, I. Dybkjaer, Ammonia - Catalysis and Manufacture, Springer Berlin 1995, Kapitel 6, Seiten 202-326.

Im ersten Zwischenwärmetauscher (2-1) und im ersten Nachwärmetauscher (4-1) wird jeweils Wärme von dem Synthesegas **D** und/oder von dem Synthesegas **H** auf Wasser bzw. auf Dampf übertragen, wobei bevorzugt Hochdruckdampf > 100 bara gebildet wird, mindestens jedoch 20 bara Dampf. Dazu wird Wasser bzw. Dampf in den ersten Zwischenwärmetauscher (2-1) und den ggf. vorhandenen zweiten Zwischenwärmetauscher bzw. in den ersten Nachwärmetauscher (4-1) und den ggf. vorhandenen zweiten Nachwärmetauscher eingeleitet, welches bevorzugt zuvor temperiert wurde.

In einer bevorzugten Ausführungsform umfasst die erfindungsgemäße Vorrichtung weiterhin:
(I) Mittel zum Rückführen zumindest eines Teils des Synthesegases **H** vom ersten Nachwärmetauscher zur ersten Reaktionsvorrichtung.

Die Mittel zum Rückführen zumindest eines Teils des Synthesegases **H** vom ersten Nachwärmetauscher (4-1) zur ersten Reaktionsvorrichtung (1) umfassen bevorzugt geeignete Rohrleitungen, deren Ausgestaltung einem Fachmann bekannt sind.

In einer bevorzugten Ausführungsform umfasst die erfindungsgemäße Vorrichtung weiterhin:
(J) Mittel zum Wärmen des Wassers und/oder des Dampfs, welches in den ersten Zwischenwärmetauscher (2-1) und den ggf. vorhandenen zweiten Zwischenwärmetauscher und/oder in den ersten Nachwärmetauscher (4-1) und den ggf. vorhandenen zweiten Nachwärmetauscher zur Bildung von Dampf geleitet wird

Bevorzugt kann die Menge an Wasser und Dampf sowie die Temperatur für jeden Wärmetauscher jeweils unabhängig voneinander geregelt werden.

Sofern in dem erfindungsgemäßen Verfahren ein erster Vorwärmetauscher (1-1) zum Einsatz kommt, so wird dieser bevorzugt auch zum Kühlen des Synthesegases *D* eingesetzt und entsprechend konfiguriert.

Sofern in dem erfindungsgemäßen Verfahren ein zweiter Vorwärmetauscher (3-1) zum Einsatz kommt, so wird dieser bevorzugt auch zum Kühlen des Synthesegases **F** eingesetzt und entsprechend konfiguriert.

In einer bevorzugten Ausführungsform umfasst
- die erste Reaktionsvorrichtung mindestens zwei Katalysatorbetten, d.h. das erste Katalysatorbett (1-A) und das zweite Katalysatorbett (1-B) sowie ggf. zusätzlich ein drittes Katalysatorbett (1-C); und
- die zweite Reaktionsvorrichtung mindestens zwei Katalysatorbetten, d.h. ein drittes Katalysatorbett (3-A) und ein viertes Katalysatorbett (3-B) sowie ggf. zusätzlich wenigstens ein weiteres Katalysatorbett (3-C).

In der einfachsten bevorzugten Ausführungsform umfasst
- die erste Reaktionsvorrichtung (1) genau zwei Katalysatorbetten, d.h. das erste Katalysatorbett (1-A) und das zweite Katalysatorbett (1-B); und
- die zweite Reaktionsvorrichtung (2) genau zwei Katalysatorbetten, d.h. das dritte Katalysatorbett (3-A) und das vierte Katalysatorbett (3-B).

In einer anderen bevorzugten Ausführungsform umfasst
- die erste Reaktionsvorrichtung (1) genau zwei Katalysatorbetten, d.h. das erste Katalysatorbett (1-A) und das zweite Katalysatorbett (1-B); und
- die zweite Reaktionsvorrichtung (3) mindestens zwei Katalysatorbetten, d.h. das dritte Katalysatorbett (3-A) und das vierte Katalysatorbett (3-B) sowie ggf. zusätzlich ein weiteres (fünftes) Katalysatorbett (3-C).

In einer anderen bevorzugten Ausführungsform umfasst
- die erste Reaktionsvorrichtung (1) mindestens zwei Katalysatorbetten, d.h. das erste Katalysatorbett (1-A) und das zweite Katalysatorbett (1-B) sowie ggf. zusätzlich wenigstens ein weiteres (drittes) Katalysatorbett (1-C); und
- die zweite Reaktionsvorrichtung (3) genau zwei Katalysatorbetten, d.h. ein viertes Katalysatorbett (3-A) und ein fünftes Katalysatorbett (3-B).

Gemäß einer bevorzugten Ausführungsvariante der erfindungsgemäßen Vorrichtung ist der erste Wärmetauscher (1-2) in der ersten Reaktionsvorrichtung so angeordnet, dass er zunächst von dem frischen Synthesegas **A** durchströmt wird, bevor dieses in das erste Katalysatorbett (1-A) eintritt und dann vorzugsweise im Gegenstrom von dem aus dem ersten Katalysatorbett (1-A) austretenden Synthesegas **B**, welches Produkt und nicht umgesetzte Reaktanden umfasst, nach dem Verlassen des ersten Katalysatorbetts (1-A) und vor dem Eintreten in das zweite Katalysatorbett (1-B) durchströmt wird.

Gemäß einer bevorzugten Ausführungsvariante der erfindungsgemäßen Vorrichtung ist weiterhin der dritte Wärmetauscher (3-2) in der zweiten Reaktionsvorrichtung (3) so angeordnet, dass er zunächst von dem die erste Reaktionsvorrichtung (1) verlassenden Synthesegas **D** durchströmt wird, bevor dieses in das dritte Katalysatorbett (3-A) eintritt und dass er vorzugsweise im Gegenstrom von dem aus dem dritten Katalysatorbett (3-A) austretenden Synthesegas, welches Produkt und nicht umgesetzte Reaktanden umfasst, nach dem Verlassen des dritten Katalysatorbetts (3-A) und vor dem Eintreten in das vierte Katalysatorbett (3-B) durchströmt wird.

Die erfindungsgemäße Vorrichtung eignet sich besonders zum Durchführen des erfindungsgemäßen Verfahrens. Ein weiterer Aspekt der Erfindung umfasst daher die Verwendung der erfindungsgemäßen Vorrichtung in dem erfindungsgemäßen Verfahren.

Figur 1 illustriert schematisch eine Anlage gemäß einem ersten Ausführungsbeispiel der Erfindung, mit deren Hilfe ein erfindungsgemäß bevorzugtes Verfahren durchgeführt werden kann;

Figur 2 zeigt in schematischer Ansicht eine Anlage gemäß einem alternativen Ausführungsbeispiel der vorliegenden Erfindung.

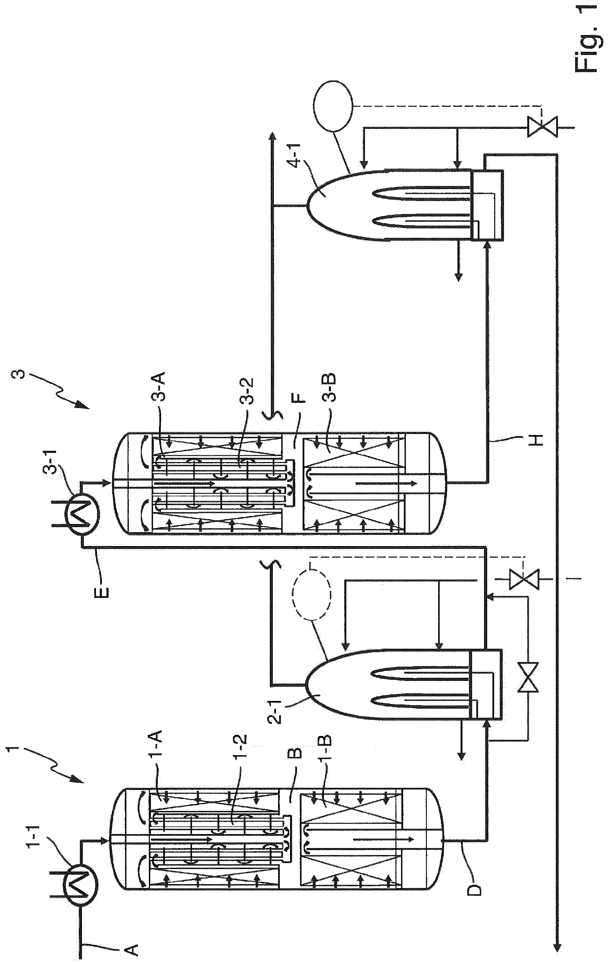

Die in Figur 1 gezeigte Ausführungsvariante zeigt eine erfindungsgemäße Anlage mit zwei Reaktionsvorrichtungen (1), (2), welche beide jeweils zwei Katalysatorbetten enthalten, so dass die Anlage insgesamt vier Katalysatorbetten umfasst. Ein frisches Synthesegas **A** umfassend Reaktanden und ggf. inerte Komponenten wird in eine erste Reaktionsvorrichtung (1) eingeleitet, welche ein erstes Katalysatorbett (1-A) und ein zweites Katalysatorbett (1-B) sowie einen ersten Wärmetauscher (1-2) umfasst. Bevor das frische Synthesegas **A** in die erste Reaktionsvorrichtung (1) gelangt kann dieses noch einen in der Zuleitung vorgeschalteten Vorwärmetauscher (1-1) durchströmen. Danach wird das frische Synthesegas **A** in der ersten Reaktionsvorrichtung (1) in dem ersten Wärmetauscher (1-2) gewärmt. Anschließend wird das gewärmte frische Synthesegas **A** über das erste Katalysatorbett (1-A) geleitet unter Bildung eines Synthesegases **B** umfassend Produkt und nicht umgesetzte Reaktanden.

Wie man in Figur 1 erkennen kann, ist der erste Wärmetauscher (1-2) so angeordnet, dass er radial innen innerhalb des ersten Katalysatorbetts (1-A) liegt. Mit anderen Worten, dass Katalysatorbett (1-A) ist ringförmig ausgebildet, befindet sich in der ersten Reaktionsvorrichtung (1) radial außen liegend und umgibt den ersten Wärmetauscher (1-2) ringförmig. Das erste Katalysatorbett (1-A) und der konzentrisch innerhalb dieses liegende Wärmetauscher (1-2) haben in etwa die gleiche axiale Länge und erstrecken sich beide jeweils nur über einen oberen Teil der axialen Länge der ersten Reaktionsvorrichtung (1).

Im Detail ist der Strömungsweg des frischen Synthesegases **A** wie folgt. Zunächst gelangt das frische Synthesegas **A** in ein gerades Rohr des ersten Wärmetauschers (1-2), welches sich mittig etwa in Achsrichtung im oberen Bereich in der ersten Reaktionsvorrichtung (1) erstreckt und von dem frischen Synthesegas **A** von oben nach unten durchströmt wird. Am unteren Ende erfolgt eine Umkehr der Strömungsrichtung und das frische Synthesegas strömt durch die Rohre im ersten Wärmetauscher (1-2) wieder nach oben, wo es dann oberhalb des ersten Wärmetauschers in Richtung der Pfeile radial nach außen strömt, um dann das erste Katalysatorbett (1-A) von radial außen nach radial innen zu durchströmen, wobei die katalytische Reaktion stattfindet. Danach strömt das Synthesegas, welches sich durch die Reaktion erwärmt hat, in den radial innen liegenden ersten Wärmetauscher (1-2) ein. Hierbei wird das Synthesegas so geleitet, dass der Wärmetauscher von oben nach unten durchströmt wird, wobei es sich abkühlt, da ein Wärmetausch mit dem ebenfalls den ersten Wärmetauscher durchströmenden kühleren frischen Synthesegas **A** stattfindet. Dann verlässt das Synthesegas den ersten Wärmetauscher (1-2) am unteren Ende, um unterhalb des ersten Wärmetauschers wieder radial nach außen zu strömen.

Dadurch erfolgt der Eintritt in das zweite Katalysatorbett (1-B), welches stromabwärts zu dem ersten Katalysatorbett (1-A) in der ersten Reaktionsvorrichtung (1) angeordnet ist, wieder von radial außen her in Richtung der Pfeile. Das in dem ersten Wärmetauscher (1-2) abgekühlte Synthesegas **B** strömt dann radial von außen nach innen in Richtung der horizontalen Pfeile durch das zweite Katalysatorbett (1-B) unter Bildung eines Synthesegases **D** umfassend Produkt und nicht umgesetzte Reaktanden. Im radial inneren Bereich erfolgt im oberen Bereich des zweiten Katalysatorbetts (1-B) eine Umlenkung der horizontalen Strömung in eine vertikale Strömung, so dass das Synthesegas **D** nach der Reaktion im zweiten Katalysatorbett (1-B) in Richtung des großen mittigen Pfeils nach unten strömt und am unteren Ende aus der ersten Reaktionsvorrichtung (1) austritt. Dem zweiten Katalysatorbett (1-B) ist innerhalb der ersten Reaktionsvorrichtung (1) kein weiterer Wärmetauscher zugeordnet, so dass das zweite Katalysatorbett (1-B) eine größere radiale Ausdehnung aufweisen kann als das erste Katalysatorbett und entsprechend mehr Volumen für die Reaktion im zweiten Katalysatorbett (1-B) zur Verfügung steht.

Nach dem Ausleiten aus der ersten Reaktionsvorrichtung (1) wird zumindest ein Teil des Synthesegases **D** über einen ersten Zwischenwärmetauscher (2-1) geleitet und dabei gekühlt. Der erste Zwischenwärmetauscher (2-1) wird vorzugsweise von einem Kesselspeisewasser durchströmt, welches zuvor temperiert wurde. In dem ersten Zwischenwärmetauscher (2-1) wird Wärme von dem Synthesegas **D** auf das Kesselspeisewasser unter Bildung von Hochdruckdampf (5) übertragen.

Das abgekühlte Synthesegas **E** wird anschließend in eine zweite Reaktionsvorrichtung (3) eingeleitet, welche ein drittes Katalysatorbett (3-A) und ein vieres Katalysatorbett (3-B) sowie einen dritten Wärmetauscher (3-2) umfasst. Zunächst wird das Synthesegas **E** in dem dritten Wärmetauscher (3-2) gewärmt. Anschließend wird das gewärmte Synthesegas **E** über das dritte Katalysatorbett (3-A) geleitet unter Bildung eines Synthesegases **F** umfassend Produkt und nicht umgesetzte Reaktanden. Der Aufbau des dritten Katalysatorbetts (3-A) und des diesem zugeordneten Wärmetauschers (3-2) sind im Prinzip analog zu den Verhältnissen bezüglich des ersten Katalysatorbetts (1-A) und des diesem zugeordneten ersten Wärmetauschers (1-2). Dies gilt ebenso für die räumliche Anordnung und die Strömungsverhältnisse des Synthesegases wie sie bereits oben erläutert wurden. Der dritte Wärmtauscher (3-2) liegt somit konzentrisch innerhalb des dritten Katalysatorbetts (3-A) und wird von dem Synthesegas **E** zweimal durchströmt, nämlich zum einen beim Eintritt des Synthesegases **E** in die zweite Reaktionsvorrichtung (3) zu dessen Erwärmung und außerdem nach der Reaktion im dritten Katalysatorbett zur Abkühlung, um die bei der Reaktion im Katalysatorbett entstehende Wärme abzuführen.

Das Synthesegas **F** wird nach dem Austritt aus dem dritten Wärmetauscher (3-2) und der dortigen Abkühlung anschließend über das vierte Katalysatorbett (3-B) geleitet, unter Bildung eines Synthesegases **H** umfassend Produkt und nicht umgesetzte Reaktanden. Dem vierten Katalysatorbett (3-B) ist ebenso wie bei dem zweiten Katalysatorbett (1-B) kein weiterer Wärmetauscher innerhalb der Reaktionsvorrichtung (3) direkt zugeordnet und es daher eine größere radiale Ausdehnung als das dritte Katalysatorbett (3-A). Die Anordnung und die Strömungsverhältnisse entsprechen denjenigen wie zuvor bei dem zweiten Katalysatorbett (1-B) beschrieben und das Synthesegas **H** verlässt die zweite Reaktionsvorrichtung (3) in axialer Richtung am unteren Ende wie durch den Pfeil in Figur 1 angedeutet.

Nach dem Ausleiten aus der zweiten Reaktionsvorrichtung (3) wird zumindest ein Teil des Synthesegases **H** über einen ersten Nachwärmetauscher (4-1) geleitet und dabei gekühlt. Der erste Nachwärmetauscher (4-1) wird vorzugsweise von einem Kesselspeisewasser durchströmt, welches zuvor temperiert wurde. In dem ersten Nachwärmetauscher (4-1) wird Wärme von dem Synthesegas **H** auf das Kesselspeisewasser unter Bildung von Hochdruckdampf (5) übertragen.

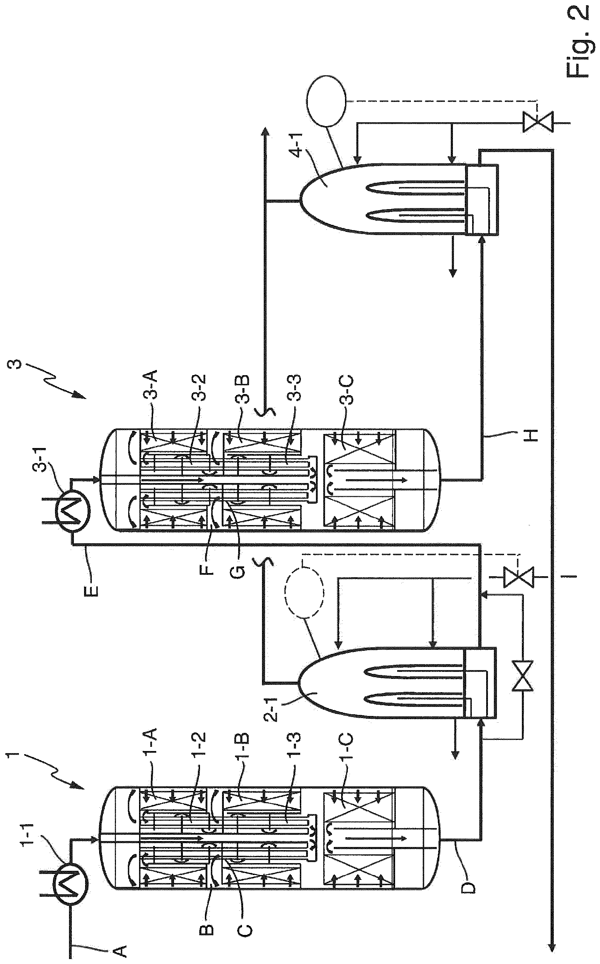

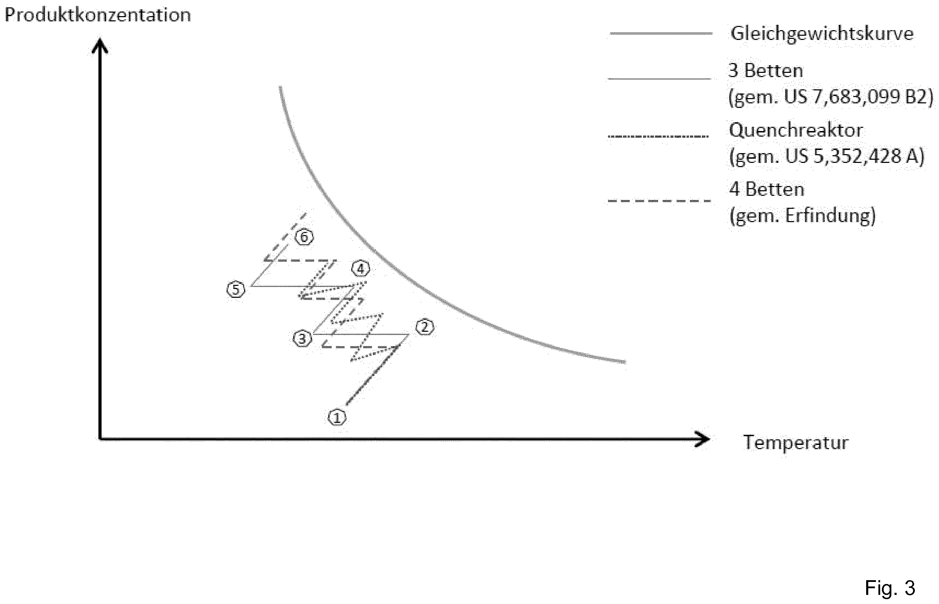

Nachfolgend wird unter Bezugnahme auf die Figur 2 ein alternatives Ausführungsbeispiel der vorliegenden Erfindung beschrieben. Anders als bei der zuvor beschriebenen Anlagenvariante sind bei dieser Variante in jeder der beiden Reaktionsvorrichtung (1), (3) jeweils drei Katalysatorbetten vorgesehen, so dass insgesamt sechs Katalysatorbetten vorhanden sind. Dies sind in der ersten Reaktionsvorrichtung die Katalysatorbetten (1-A), (1-B) und (1-C), die in Strömungsrichtung des Prozessgasstroms in der ersten Reaktionsvorrichtung (1) hintereinander angeordnet sind und die jeweils in einer wie hier etwa zylindrischen Reaktionsvorrichtung (1) axial aufeinander folgen. Dabei sind dem ersten Katalysatorbett (1-A) und dem zweiten Katalysatorbett (1-B) jeweils Wärmetauscher (1-2), (1-3) zugeordnet, welche wie zuvor bereits unter Bezugnahme auf Figur 1 beschrieben jeweils konzentrisch innerhalb der jeweiligen Katalysatorbetten (1-A, 1-B) angeordnet sind und in der oben beschriebenen Weise von dem Prozessgas durchströmt werden. Das dritte Katalysatorbett (1-C) in der ersten Reaktionsvorrichtung (1) weist hingegen keinen diesem zugeordneten Wärmetauscher aus und kann entsprechend mehr Katalysatorvolumen aufweisen, da es sich weiter nach radial innen hin erstreckt.

In der zweiten Reaktionsvorrichtung (3) sind hier ebenfalls drei Katalysatorbetten (3-A), (3-B) und (3-C) vorgesehen, die in Strömungsrichtung des Prozessgasstroms in der zweiten Reaktionsvorrichtung (3) hintereinander angeordnet sind und die jeweils in einer wie hier etwa zylindrischen Reaktionsvorrichtung (3) axial aufeinander folgen. Dabei sind dem insgesamt vierten Katalysatorbett (3-A) und dem fünften Katalysatorbett (3-B) jeweils Wärmetauscher (3-2), (3-3) zugeordnet, welche wie zuvor bereits unter Bezugnahme auf Figur 1 beschrieben jeweils konzentrisch innerhalb der jeweiligen Katalysatorbetten (3-A, 3-B) angeordnet sind und in der oben beschriebenen Weise von dem Prozessgas durchströmt werden. Das dritte Katalysatorbett (3-C) in der zweiten Reaktionsvorrichtung (3) weist hingegen keinen diesem zugeordneten Wärmetauscher aus und kann entsprechend mehr Katalysatorvolumen aufweisen, da es sich weiter nach radial innen hin erstreckt.

Bei dieser Variante tritt aus dem zweiten Katalysatorbett ein Synthesegas **C** aus und die erste Reaktionsvorrichtung (1) verlässt nach dem dritten Katalysatorbett (1-C) ein Synthesegasstrom **D.** Ein Synthesegas E tritt in die zweite Reaktionsvorrichtung (3) ein, das das vierte Katalysatorbett (3-A) verlassende Synthesegas ist mit **F** bezeichnet, aus dem fünften Katalysatorbett (3-B) tritt ein Synthesegas **G** aus und das die zweite Reaktionsvorrichtung (3) nach dem sechsten Katalysatorbett (3-C) verlassende Produktgas ist mit **H** bezeichnet. Die übrigen Anlagenteile sind in der Ausführungsvariante gemäß Figur 2 analog ausgebildet wie oben bereits in dem ersten Ausführungsbeispiel gemäß Figur 1 beschrieben, so dass diesbezüglich auf die dortigen Ausführungen Bezug genommen wird.

Weitere mögliche Varianten bestehen aus einer Mischung der erwähnten Varianten gemäß Figur 1 und Figur 2. In einem Fall würde die erste Reaktionsvorrichtung (1) gemäß Figur 2 ausgeführt, das heißt mit drei Katalysatorbetten (1-A), (1-B) und (1-C), und die zweite Reaktionsvorrichtung (3) gemäß Figur 1 aus zwei Katalysatorbetten bestehen, (3-A) und (3-B). In einem anderen Fall würde die erste Reaktionsvorrichtung (1) gemäß Figur 2 ausgeführt, das heißt mit zwei Katalysatorbetten (1-A) und (1-B), und die zweite Reaktionsvorrichtung (3) aus drei Katalysatorbetten bestehen, (3-A), (3-B) und (3-C).

Das unten stehende Diagramm beschreibt verschiedene Reaktionsvorrichtungen gemäß dem Stand der Technik, im Vergleich zum Erfindungsgegenstand. Die Darstellung zeigt den Reaktionsverlauf über mehrere Katalysatorbetten samt Abkühlung, genauer den Zusammenhang zwischen Produktkonzentration und Reaktionstemperatur im Vergleich zum Reaktionsgleichgewicht. Alle drei Reaktorkurven starten unten im Diagramm bei ähnlichen Temperaturen.

Die grüne Kurve für den Dreibettkonverter startet bei Punkt 1, hier beginnt die exotherme Reaktion, Produktkonzentration und Temperatur steigen an. An Punkt 2 ist das Katalysatorbett durchströmt, die Reaktion stoppt und das Gas wird bei gleichbleibender Konzentration hin zu Punkt 3 abgekühlt. Nun wird das Gas in das zweite Katalysatorbett geleitet, Konzentration und Temperatur steigen wieder bis Punkt 4 an. Von Punkt 4 zu Punkt 5 wird das Gas wieder in einem Wärmetauscher abgekühlt. Im dritten Katalysatorbett reagiert das Gas weiter bis zu Punkt 6.

Die braune Kurve für den Quenchreaktor verläuft analog zur grünen Kurve, mit dem Unterschied, dass die Zwischenkühlungen durch das Quenchgas (Punkt 2 zu 3 und Punkt 4 zu 5) nicht nur die Temperatur, sondern durch das Zumischen von Frischgas auch die Konzentration absenkt.

Die blaue Kurve zeigt den Verlauf für den in der Erfindung beschriebenen 4-Bettreaktor. Die Kurve verläuft in diesem Diagramm ebenfalls analog zu den anderen Kurven. Im Unterschied zu den anderen Kurven, gibt es hier 8 Eckpunkte auf der Kurve, entsprechend durch die höhere Anzahl der Betten. Ebenfalls kann man diesem Diagramm entnehmen, dass der 4-Bettreaktor die höchste Produktkonzentration am Austritt erzeugt (oberster Punkt der Kurve) und somit deutliche Vorteile gegenüber den anderen Reaktortypen aufweist.

### Bezugszeichenliste:

- A: Synthesegas **A**
- 1: erste Reaktionsvorrichtung
- 1-1: vorgeschalteter Wärmetauscher
- 1-2: erster Wärmetauscher
- 1-A: erstes Katalysatorbett
- B: Synthesegas **B**
- 1-B: zweites Katalysatorbett
- C: Synthesegas C
- 1-3: zweiter Wärmetauscher
- 1-C: drittes Katalysatorbett
- 2-1: Zwischenwärmetauscher
- 5: Hochdruckdampf
- 3: zweite Reaktionsvorrichtung
- 3-1: vorgeschalteter Wärmetauscher
- 3-2: dritter Wärmetauscher
- 3-A: drittes bzw. viertes Katalysatorbett
- E: Synthesegas E
- 3-B: viertes bzw. fünftes Katalysatorbett
- F: Synthesegas F
- G: Synthesegas G
- 3-3: dritter Wärmetauscher
- 3-C: sechstes Katalysatorbett
- H: Synthesegas H
- 4-1: Nachwärmetauscher

## Patentansprüche

1. Verfahren zur Herstellung von Ammoniak aus einem Synthesegas unter heterogener Gaskatalyse in mindestens zwei hintereinander geschalteten Reaktionsvorrichtungen (1, 3), wobei jede dieser Reaktionsvorrichtungen (1) wenigstens zwei Katalysatorbetten (1-A, 1-B, 3-A, 3-B) umfasst, durch die hindurch das Synthesegas geleitet wird und in denen eine mindestens teilweise Umsetzung zu Produktgas erfolgt, wobei wenigstens ein erster Wärmetauscher (1-2) in der ersten Reaktionsvorrichtung (1) vorgesehen ist, in dem das frische Synthesegas **A** vorgewärmt wird und wobei ein Kühlen des aus dem ersten Katalysatorbettes (1-A) austretenden Synthesegases (B) umfassend Produkt und nicht umgesetzte Reaktanden vor dem Eintritt in das zweite Katalysatorbett (1-B) vorgesehen ist, **wobei** das Vorwärmen in einem ersten Wärmetauscher (1-2) erfolgt, welcher zwischen dem ersten (1-A) und dem zweiten Katalysatorbett (1-B) angeordnet ist und wobei ein im Strömungsweg zwischen der ersten Reaktionsvorrichtung (1) und der zweiten Reaktionsvorrichtung (3) angeordneter Zwischenwärmetauscher (2-1) vorgesehen ist und der aus dem zweiten Katalysatorbett (1-B) austretende heiße Produktgasstrom ohne vorherige Abkühlung zur Erzeugung von Dampf und/oder zur Vorwärmung von Kesselspeisewasser in dem Zwischenwärmetauscher (2-1) genutzt wird, **dadurch gekennzeichnet, dass** eine Abkühlung eines Prozessgasstroms **D** in dem Zwischenwärmetauscher (2-1) unter die für ein nachfolgendes drittes Katalysatorbett (3-A) erforderliche Eintrittstemperatur, und ggf. auch unter die Temperatur des erzeugten Dampfes zur größtmöglichen Nutzung der Energie des Stroms **D**, erfolgt, um in einem nachgeschalteten Schritt den Prozessgasstrom mithilfe eines weiteren Wärmetauschers (3-2), welcher gleichzeitig als Zwischenkühler zwischen dem dritten Katalysatorbett (3-A) und einem vierten Katalysatorbett (3-B) dient, wieder auf eine definierte optimale Prozesstemperatur für das Katalysatorbett (3-A) zu bringen, welches eine optimale Temperaturführung über alle Katalysatorbetten ermöglicht.

2. Verfahren gemäß Anspruch 1, **dadurch gekennzeichnet, dass** das Kühlen des aus dem ersten Katalysatorbett (1-A) austretenden Synthesegases **B** vor dem Eintritt in das zweite Katalysatorbett (1-B) mittels des ersten Wärmetauschers (1-2) erfolgt, welcher im Strömungsweg hinsichtlich des einen Anteil an Produkt umfassenden Synthesegases **B** zwischen dem ersten (1-A) und dem zweiten Katalysatorbett (1-B) angeordnet ist.

3. Verfahren nach Anspruch 1 oder 2, **dadurch gekennzeichnet, dass** der gesamte Feedgasstrom des frischen Synthesegases **A** durch das erste Katalysatorbett (1-A) und anschließend auch durch das zweite Katalysatorbett (1-B) hindurch geleitet wird.

4. Verfahren gemäß einem der vorstehenden Ansprüche, **dadurch gekennzeichnet, dass** zumindest ein Teil eines Synthesegases **H**, welches aus dem vierten Katalysatorbett (3-B) austritt, in einem Kreislauf geführt wird und mit dem frischen Synthesegas **A** vermischt wird.

5. Verfahren gemäß einem der vorstehenden Ansprüche, **dadurch gekennzeichnet, dass** wenigstens ein weiterer Wärmetauscher (3-2), der von dem in das dritte Katalysatorbett (3-A) eintretenden Synthesegas durchströmt wird, um dieses vorzuwärmen, in der zweiten Reaktionsvorrichtung (3) zwischen dem dritten Katalysatorbett (3-A) und dem vierten Katalysatorbett (3-B) angeordnet ist und gleichzeitig dazu dient, das in das vierte Katalysatorbett (3-B) eintretende Synthesegas (E) abzukühlen.

6. Verfahren gemäß einem der vorstehenden Ansprüche, **dadurch gekennzeichnet, dass** der gesamte aus dem zweiten Katalysatorbett (1-B) austretende, einen Anteil an Produkt umfassende, Synthesegasstrom **D** in das dritte Katalysatorbett (3-A) eingeleitet wird.

7. Verfahren gemäß einem der vorstehenden Ansprüche, **dadurch gekennzeichnet, dass** das frische Synthesegas **A** durch Reformierung von Kohlenwasserstoffen hergestellt wird, wobei die Reformierung in einem Dampfreformer, in einem gasbeheizten Reformer, in einem autothermen Reformer oder durch partielle Oxidation erfolgt oder dass das frische Synthesegas A durch Elektrolyse von Wasser und Luftzerlegung hergestellt wird.

8. Verfahren gemäß einem der vorstehenden Ansprüche, **dadurch gekennzeichnet, dass** die Synthese in einem Maßstab erfolgt, welcher eine Tagesproduktion von 1.800 t, vorzugsweise von 2.500, besonders bevorzugt 3.000 t Produkt übersteigt.

9. Vorrichtung zur Herstellung von Ammoniak aus einem Synthesegas (A) unter heterogener Gaskatalyse, insbesondere zur Verwendung in einem Verfahren gemäß einem der Ansprüche 1 bis 8, wobei die Vorrichtung die folgenden miteinander in Wirkverbindung stehenden Komponenten umfasst:
eine erste Reaktionsvorrichtung (1) umfassend:
ein erstes Katalysatorbett (1-A) konfiguriert zur Bildung eines Synthesegases **B** umfassend Produkt und nicht umgesetzte Reaktanden aus einem frischen Synthesegas **A**;
einen ersten Wärmetauscher (1-2) konfiguriert zum Wärmen des frischen Synthesegases **A** vor Eintritt in das erste Katalysatorbett (1-A) und zum Kühlen eines Synthesegases **B** nach dem Austritt aus dem ersten Katalysatorbett (1-A);
ein zweites Katalysatorbett (1-B) konfiguriert zur Bildung eines Synthesegases **D** umfassend Produkt und nicht umgesetzte Reaktanden aus dem Synthesegas **B**;
Mittel konfiguriert zum Ausleiten des Synthesegases **D** aus der ersten Reaktionsvorrichtung (1);
einen Zwischenwärmetauscher (2-1) konfiguriert zum Kühlen zumindest eines Teils des Synthesegases **D**;
eine zweite Reaktionsvorrichtung (3) umfassend:
ein drittes Katalysatorbett (3-A) konfiguriert zur Bildung eines Synthesegases **F** umfassend Produkt und nicht umgesetzte Reaktanden aus dem Synthesegases **E**;
einen dritten Wärmetauscher (3-2) konfiguriert zum Wärmen des Synthesegases **E** vor Eintritt in das dritte Katalysatorbett (3-A) und zum Kühlen des Synthesegases **F** nach dem Austritt aus dem dritten Katalysatorbett (3-A);
ein viertes Katalysatorbett (3-B) konfiguriert zur Bildung eines Synthesegases **H** umfassend Produkt und nicht umgesetzte Reaktanden aus dem Synthesegas **F**;
Mittel konfiguriert zum Ausleiten des Synthesegases **H** aus der zweiten Reaktionsvorrichtung (3); und
einen Nachwärmetauscher (4-1) konfiguriert zum Kühlen zumindest eines Teils des Synthesegases **H**, **dadurch gekennzeichnet, dass** der erste Wärmetauscher (1-2) konzentrisch radial innerhalb des ersten Katalysatorbetts (1-A) angeordnet ist und/oder der dritte Wärmetauscher (3-2) konzentrisch radial innerhalb des dritten Katalysatorbetts (3-A) angeordnet ist.

10. Vorrichtung gemäß Anspruch 9, **dadurch gekennzeichnet, dass**
- der erste Wärmetauscher (1-2); und/oder
- der Zwischenwärmetauscher (2-1); und/oder
- der dritte Wärmetauscher (3-2); und/oder
- der Nachwärmetauscher (4-1)
jeweils unabhängig voneinander als Geradrohr-, U-Rohr oder Plattenwärmetauscher ausgebildet sind.

11. Vorrichtung gemäß einem der Ansprüche 9 oder 10, **dadurch gekennzeichnet, dass** die Vorrichtung zusätzlich umfasst:
Mittel konfiguriert zum Rückführen zumindest eines Teils des Synthesegases **H** vom Nachwärmetauscher (4-1) zur ersten Reaktionsvorrichtung (1).

12. Vorrichtung gemäß einem der Ansprüche 9 bis 11, **dadurch gekennzeichnet, dass** die Vorrichtung zusätzlich umfasst:
Mittel konfiguriert zum Wärmen von Wasser, welches in den Zwischenwärmetauscher (2-1) und/oder in den Nachwärmetauscher (4-1) zur Bildung von Dampf und/oder zur weiteren Vorwärmung des Wassers geleitet wird.

13. Vorrichtung gemäß einem der Ansprüche 9 bis 12, **dadurch gekennzeichnet, dass** diese ein weiteres Katalysatorbett (1-C bzw. 3-C) umfasst, welches in der ersten Reaktionsvorrichtung (1) stromabwärts der zweiten Katalysatorbetts (1-B) oder in der zweiten Reaktionsvorrichtung (3) stromabwärts des vierten Katalysatorbetts (3-B) angeordnet ist.

14. Vorrichtung gemäß einem der Ansprüche 9 bis 13, **dadurch gekennzeichnet, dass** diese in der ersten Reaktionsvorrichtung (1) wenigstens drei in Strömungsrichtung des Synthesegasstroms hintereinander angeordnete Katalysatorbetten und/oder in der zweiten Reaktionsvorrichtung (3) wenigstens drei in Strömungsrichtung des Synthesegasstroms hintereinander angeordnete Katalysatorbetten umfasst.

15. Vorrichtung gemäß einem der Ansprüche 9 bis 14, **dadurch gekennzeichnet, dass** der erste Wärmetauscher (1-2) in der ersten Reaktionsvorrichtung (1) so angeordnet ist, dass er zunächst von dem frischen Synthesegas **A** durchströmt wird, bevor dieses in das erste Katalysatorbett (1-A) eintritt und dass er bevorzugt im Gegenstrom von dem aus dem ersten Katalysatorbett (1-A) austretenden Synthesegas **B**, welches Produkt und nicht umgesetzte Reaktanden umfasst, nach dem Verlassen des ersten Katalysatorbetts (1-A) und vor dem Eintreten in das zweite Katalysatorbett (1-B) durchströmt wird.

16. Vorrichtung gemäß einem der Ansprüche 9 bis 15, **dadurch gekennzeichnet, dass** der dritte Wärmetauscher (3-2) in der zweiten Reaktionsvorrichtung (3) so angeordnet ist, dass er zunächst von dem die erste Reaktionsvorrichtung (1) verlassenden Synthesegas **C** durchströmt wird, bevor dieses in das dritte Katalysatorbett (3-A) eintritt und dass er bevorzugt im Gegenstrom von dem aus dem dritten Katalysatorbett (3-A) austretenden Synthesegas, welches Produkt und nicht umgesetzte Reaktanden umfasst, nach dem Verlassen des dritten Katalysatorbetts (3-A) und vor dem Eintreten in das vierte Katalysatorbett (3-B) durchströmt wird.

17. Vorrichtung gemäß einem der Ansprüche 9 bis 16, **dadurch gekennzeichnet, dass** ein erster Vorwärmetauscher (1-1) vorgesehen ist, um das frische Synthesegas A vorzuwärmen.

18. Vorrichtung gemäß einem der Ansprüche 16 oder 17, **dadurch gekennzeichnet, dass** ein zweiter Vorwärmetauscher (3-1) vorgesehen ist, um das Synthesegas C bzw. D vorzuwärmen.

## Claims

1. Process for preparing ammonia from a synthesis gas under heterogeneous gas catalysis in at least two series-connected reaction apparatuses (1, 3), where each of these reaction apparatuses (1) comprises at least two catalyst beds (1-A, 1-B, 3-A, 3-B) through which the synthesis gas is passed and in which there is at least partial conversion to product gas, where at least one first heat exchanger (1-2) has been provided in the first reaction apparatus (1), in which the fresh synthesis gas **A** is preheated, and where cooling of the synthesis gas (B) comprising product and unconverted reactants that exits from the first catalyst bed (1-A) has been provided prior to entry into the second catalyst bed (1-B), **where** the preheating is effected in a first heat exchanger (1-2) disposed between the first catalyst bed (1-A) and the second catalyst bed (1-B) and where an intermediate heat exchanger (2-1) disposed in the flow pathway between the first reaction apparatus (1) and the second reaction apparatus (3) has been provided and the hot product gas stream exiting from the second catalyst bed (1-B) is utilized without prior cooling for raising of steam and/or for preheating of boiler feed water in the intermediate heat exchanger (2-1), **characterized in that** a product gas stream **D** is cooled in the intermediate heat exchanger (2-1) below the entry temperature required for a downstream third catalyst bed (3-A), and optionally also below the temperature of the steam raised for the greatest possible utilization of the energy in stream **D**, in order, in a subsequent step, with the aid of a further heat exchanger (3-2) which simultaneously serves as intermediate cooler between the third catalyst bed (3-A) and a fourth catalyst bed (3-B), to bring the process gas stream back to a defined optimal process temperature for the catalyst bed (3-A) that enables optimal temperature control over all catalyst beds.

2. Process according to Claim 1, **characterized in that** the synthesis gas **B** leaving the first catalyst bed (1-A), prior to entry into the second catalyst bed (1-B), is cooled by means of the first heat exchanger (1-2) which is disposed between the first catalyst bed (1-A) and the second catalyst bed (1-B) in the flow pathway of the synthesis gas **B** comprising a proportion of product.

3. Process according to Claim 1 or 2, **characterized in that** the entire feed gas stream of the fresh synthesis gas **A** is passed through the first catalyst bed (1-A) and then also through the second catalyst bed (1-B) .

4. Process according to any of the preceding claims, **characterized in that** at least a portion of a synthesis gas **H** which exits from the fourth catalyst bed (3-B) is circulated and mixed with the fresh synthesis gas **A**.

5. Process according to any of the preceding claims, **characterized in that** at least one further heat exchanger (3-2) through which the synthesis gas entering the third catalyst bed (3-A) flows in order to preheat it is disposed in the second reaction apparatus (3) between the third catalyst bed (3-A) and the fourth catalyst bed (3-B) and simultaneously serves to cool the synthesis gas (E) entering the fourth catalyst bed (3-B) .

6. Process according to any of the preceding claims, **characterized in that** the entire synthesis gas stream **D** that exits from the second catalyst bed (1-B) and comprises a proportion of product is introduced into the third catalyst bed (3-A).

7. Process according to any of the preceding claims, **characterized in that** the fresh synthesis gas **A** is produced by reforming of hydrocarbons, where the reforming is effected in a steam reformer, in a gas-heated reformer, in an autothermal reformer or by partial oxidation, or **in that** the fresh synthesis gas A is produced by electrolysis of water and air fractionation.

8. Process according to any of the preceding claims, **characterized in that** the synthesis is effected on a scale that exceeds a daily production of 1800 t, preferably of 2500, more preferably 3000 t, of product.

9. Apparatus for production of ammonia from a synthesis gas (A) under heterogeneous gas catalysis, especially for use in a process according to any of Claims 1 to 8, wherein the apparatus comprises the following components that are functionally connected to one another:
a first reaction apparatus (1) comprising:
a first catalyst bed (1-A) configured to form a synthesis gas **B** comprising product and unconverted reactants from a fresh synthesis gas **A**;
a first heat exchanger (1-2) configured to heat the fresh synthesis gas **A** prior to entry into the first catalyst bed (1-A) and for cooling of a synthesis gas **B** after exit from the first catalyst bed (1-A);
a second catalyst bed (1-B) configured to form a synthesis gas **D** comprising product and unconverted reactants from synthesis gas **B**;
means configured to discharge synthesis gas **D** from the first reaction apparatus (1);
an intermediate heat exchanger (2-1) configured to cool at least a portion of synthesis gas **D**;
a second reaction apparatus (3) comprising:
a third catalyst bed (3-A) configured to form a synthesis gas **F** comprising product and unconverted reactants from synthesis gas **E**;
a third heat exchanger (3-2) configured to heat synthesis gas **E** prior to entry into the third catalyst bed (3-A) and to cool synthesis gas **F** after exit from the third catalyst bed (3-A);
a fourth catalyst bed (3-B) configured to form a synthesis gas **H** comprising product and unconverted reactants from synthesis gas **F**;
means configured to discharge synthesis gas **H** from the second reaction apparatus (3); and
a downstream heat exchanger (4-1) configured to cool at least a portion of the synthesis gas **H**, **characterized in that** the first heat exchanger (1-2) is arranged in a concentric radial manner within the first catalyst bed (1-A) and/or the third heat exchanger (3-2) is arranged in a concentric radial manner within the third catalyst bed (3-A).

10. Apparatus according to Claim 9, **characterized in that**
- the first heat exchanger (1-2); and/or
- the intermediate heat exchanger (2-1); and/or
- the third heat exchanger (3-2); and/or
- the downstream heat exchanger (4-1) each independently take the form of straight-tube, U-tube or plate heat exchangers.

11. Apparatus according to either of Claims 9 and 10, **characterized in that** the apparatus additionally comprises:
means configured to recycle at least a portion of the synthesis gas **H** from the downstream heat exchanger (4-1) to the first reaction apparatus (1).

12. Apparatus according to any of Claims 9 to 11, **characterized in that** the apparatus additionally comprises:
means configured to heat water which is guided into the intermediate heat exchanger (2-1) and/or into the downstream heat exchanger (4-1) for formation of steam and/or for further preheating of the water.

13. Apparatus according to any of Claims 9 to 12, **characterized in that** it comprises a further catalyst bed (1-C/3-C) arranged downstream of the second catalyst bed (1-B) in the first reaction apparatus (1) or downstream of the fourth catalyst bed (3-B) in the second reaction apparatus (3).

14. Apparatus according to any of Claims 9 to 13, **characterized in that** it comprises at least three catalyst beds arranged in series in flow direction of the synthesis gas stream in the first reaction apparatus (1) and/or at least three catalyst beds arranged in series in flow direction of the synthesis gas stream in the second reaction apparatus (3).

15. Apparatus according to any of Claims 9 to 14, **characterized in that** the first heat exchanger (1-2) is arranged within the first reaction apparatus (1) such that the fresh synthesis gas **A** flows through it first before it enters the first catalyst bed (1-A), and that the synthesis gas **B** comprising product and unconverted reactants which leaves the first catalyst bed (1-A) preferably flows through it in countercurrent after leaving the first catalyst bed (1-A) and before entering the second catalyst bed (1-B).

16. Apparatus according to any of Claims 9 to 15, **characterized in that** the third heat exchanger (3-2) is disposed in the second reaction apparatus (3) such that the synthesis gas **C** leaving the first reaction apparatus (1) flows through it first before it enters the third catalyst bed (3-A), and that the synthesis gas leaving the third catalyst bed (3-A), comprising product and unconverted reactants, preferably flows through it in countercurrent after leaving the third catalyst bed (3-A) and before entering the fourth catalyst bed (3-B).

17. Apparatus according to any of Claims 9 to 16, **characterized in that** a first preliminary heat exchanger (1-1) is provided in order to preheat the fresh synthesis gas A.

18. Apparatus according to either of Claims 16 and 17, **characterized in that** a second preliminary heat exchanger (3-1) is provided in order to preheat the synthesis gas C/D.

## Revendications

1. Procédé de fabrication d'ammoniac à partir d'un gaz de synthèse sous catalyse gazeuse hétérogène dans au moins deux dispositifs de réaction raccordés en série (1, 3), ces dispositifs de réaction (1) comprenant chacun au moins deux lits catalytiques (1-A, 1-B, 3-A, 3-B), au travers desquels le gaz de synthèse est acheminé et dans lesquels une transformation au moins partielle en gaz de produits a lieu, au moins un premier échangeur de chaleur (1-2) étant prévu dans le premier dispositif de réaction (1), dans lequel le gaz de synthèse frais **A** est préchauffé, et un refroidissement du gaz de synthèse (B) sortant du premier lit catalytique (1-A) comprenant un produit et des réactifs non réagis étant prévu avant l'entrée dans le deuxième lit catalytique (1-B), le préchauffage ayant lieu dans un premier échangeur de chaleur (1-2) qui est agencé entre le premier (1-A) et le deuxième lit catalytique (1-B), et un échangeur de chaleur intermédiaire (2-1) agencé dans la voie d'écoulement entre le premier dispositif de réaction (1) et le deuxième dispositif de réaction (3) étant prévu, et le courant gazeux de produits chaud sortant du deuxième lit catalytique (1-B) étant utilisé dans l'échangeur de chaleur intermédiaire (2-1) sans refroidissement préalable pour la génération de vapeur et/ou pour le préchauffage d'eau de chaudière, **caractérisé en ce qu'**un refroidissement d'un courant de gaz de procédé **D** a lieu dans l'échangeur de chaleur intermédiaire (2-1) en dessous de la température d'entrée nécessaire pour un troisième lit catalytique (3-A) ultérieur, et éventuellement également en dessous de la température de la vapeur générée pour l'utilisation maximale de l'énergie du courant **D**, afin d'amener de nouveau lors d'une étape ultérieure le courant de gaz de procédé à l'aide d'un échangeur de chaleur supplémentaire (3-2), qui sert simultanément de refroidisseur intermédiaire entre le troisième lit catalytique (3-A) et un quatrième lit catalytique (3-B), à une température de procédé optimale définie pour le lit catalytique (3-A), ce qui permet une régulation de température optimale sur tous les lits catalytiques.

2. Procédé selon la revendication 1, **caractérisé en ce que** le refroidissement du gaz de synthèse **B** sortant du premier lit catalytique (1-A) a lieu avant l'entrée dans le deuxième lit catalytique (1-B) au moyen du premier échangeur de chaleur (1-2), qui est agencé dans la voie d'écoulement au regard du gaz de synthèse **B** comprenant une fraction de produit entre le premier (1-A) et le deuxième lit catalytique (1-B).

3. Procédé selon la revendication 1 ou 2, **caractérisé en ce que** l'ensemble du courant gazeux d'alimentation du gaz de synthèse frais **A** est acheminé au travers du premier lit catalytique (1-A), puis également au travers du deuxième lit catalytique (1-B).

4. Procédé selon l'une quelconque des revendications précédentes, **caractérisé en ce qu'au** moins une partie d'un gaz de synthèse **H**, qui sort du quatrième lit catalytique (3-B), est mise en circulation dans un circuit et mélangée avec le gaz de synthèse frais **A**.

5. Procédé selon l'une quelconque des revendications précédentes, **caractérisé en ce qu'**au moins un échangeur de chaleur supplémentaire (3-2), qui est traversé par le gaz de synthèse entrant dans le troisième lit catalytique (3-A), afin de préchauffer celui-ci, est agencé dans le deuxième dispositif de réaction (3) entre le troisième lit catalytique (3-A) et le quatrième lit catalytique (3-B), et sert simultanément à refroidir le gaz de synthèse (E) entrant dans le quatrième lit catalytique (3-B).

6. Procédé selon l'une quelconque des revendications précédentes, **caractérisé en ce que** l'ensemble du courant de gaz de synthèse **D**, comprenant une fraction de produit, sortant du deuxième lit catalytique (1-B), est introduit dans le troisième lit catalytique (3-A).

7. Procédé selon l'une quelconque des revendications précédentes, **caractérisé en ce que** le gaz de synthèse frais **A** est fabriqué par reformage d'hydrocarbures, le reformage ayant lieu dans un reformeur à vapeur, dans un reformeur chauffé par un gaz, dans un reformeur autotherme ou par oxydation partielle, ou **en ce que** le gaz de synthèse frais **A** est fabriqué par électrolyse d'eau et décomposition d'air.

8. Procédé selon l'une quelconque des revendications précédentes, **caractérisé en ce que** la synthèse a lieu à une échelle qui dépasse une production quotidienne de 1 800 t, de préférence de 2 500, de manière particulièrement préférée de 3 000 t de produit.

9. Dispositif pour la fabrication d'ammoniac à partir d'un gaz de synthèse (A) sous catalyse gazeuse hétérogène, notamment destiné à une utilisation dans un procédé selon l'une quelconque des revendications 1 à 8, le dispositif comprenant les composants suivants reliés les uns avec les autres par une liaison fonctionnelle :
un premier dispositif de réaction (1), comprenant :
un premier lit catalytique (1-A) configuré pour la formation d'un gaz de synthèse **B** comprenant un produit et des réactifs non réagis à partir d'un gaz de synthèse frais **A** ;
un premier échangeur de chaleur (1-2) configuré pour le chauffage du gaz de synthèse frais **A** avant l'entrée dans le premier lit catalytique (1-A) et pour le refroidissement d'un gaz de synthèse **B** après la sortie du premier lit catalytique (1-A) ;
un deuxième lit catalytique (1-B) configuré pour la formation d'un gaz de synthèse **D** comprenant un produit et des réactifs non réagis à partir du gaz de synthèse **B** ;
un moyen configuré pour le déchargement du gaz de synthèse **D** du premier dispositif de réaction (1) ;
un échangeur de chaleur intermédiaire (2-1) configuré pour le refroidissement d'au moins une partie du gaz de synthèse **D** ;
un deuxième dispositif de réaction (3) comprenant :
un troisième lit catalytique (3-A) configuré pour la formation d'un gaz de synthèse **F** comprenant un produit et des réactifs non réagis à partir du gaz de synthèse **E** ;
un troisième échangeur de chaleur (3-2) configuré pour le chauffage du gaz de synthèse **E** avant l'entrée dans le troisième lit catalytique (3-A) et pour le refroidissement du gaz de synthèse **F** après la sortie du troisième lit catalytique (3-A) ;
un quatrième lit catalytique (3-B) configuré pour la formation d'un gaz de synthèse **H** comprenant un produit et des réactifs non réagis à partir du gaz de synthèse **F** ;
un moyen configuré pour le déchargement du gaz de synthèse **H** du deuxième dispositif de réaction (3) ; et
un échangeur de chaleur secondaire (4-1) configuré pour le refroidissement d'au moins une partie du gaz de synthèse **H**, **caractérisé en ce que** le premier échangeur de chaleur (1-2) est agencé de manière concentrique radiale à l'intérieur du premier lit catalytique (1-A) et/ou le troisième échangeur de chaleur (3-2) est agencé de manière concentrique radiale à l'intérieur du troisième lit catalytique (3-A).

10. Dispositif selon la revendication 9, **caractérisé en ce que**
- le premier échangeur de chaleur (1-2) ; et/ou
- l'échangeur de chaleur intermédiaire (2-1) ; et/ou
- le troisième échangeur de chaleur (3-2) ; et/ou
- l'échangeur de chaleur secondaire (4-1) sont chacun indépendamment les uns des autres configurés sous la forme d'un échangeur de chaleur à tube droit, à tube en U ou à plaques.

11. Dispositif selon l'une quelconque des revendications 9 ou 10, **caractérisé en ce que** le dispositif comprend en outre :
un moyen configuré pour le recyclage d'au moins une partie du gaz de synthèse **H** depuis l'échangeur de chaleur secondaire (4-1) dans le premier dispositif de réaction (1) .

12. Dispositif selon l'une quelconque des revendications 9 à 11, **caractérisé en ce que** le dispositif comprend en outre :
un moyen configuré pour le chauffage d'eau, qui est acheminée dans l'échangeur de chaleur intermédiaire (2-1) et/ou dans l'échangeur de chaleur secondaire (4-1) pour la formation de vapeur et/ou pour le préchauffage supplémentaire de l'eau.

13. Dispositif selon l'une quelconque des revendications 9 à 12, **caractérisé en ce que** celui-ci comprend un lit catalytique supplémentaire (1-C ou 3-C), qui est agencé dans le premier dispositif de réaction (1) en aval du deuxième lit catalytique (1-B) ou dans le deuxième dispositif de réaction (3) en aval du quatrième lit catalytique (3-B).

14. Dispositif selon l'une quelconque des revendications 9 à 13, **caractérisé en ce que** celui-ci comprend, dans le premier dispositif de réaction (1), au moins trois lits catalytiques agencés en série dans la direction d'écoulement du courant de gaz de synthèse et/ou, dans le deuxième dispositif de réaction (3), au moins trois lits catalytiques agencés en série dans la direction d'écoulement du courant de gaz de synthèse.

15. Dispositif selon l'une quelconque des revendications 9 à 14, **caractérisé en ce que** le premier échangeur de chaleur (1-2) est agencé dans le premier dispositif de réaction (1) de telle sorte qu'il soit tout d'abord traversé par le gaz de synthèse frais **A**, avant que celui-ci n'entre dans le premier lit catalytique (1-A), et de telle sorte qu'il soit de préférence traversé à contre-courant par le gaz de synthèse **B** sortant du premier lit catalytique (1-A), qui comprend un produit et des réactifs non réagis, après la sortie du premier lit catalytique (1-A) et avant l'entrée dans le deuxième lit catalytique (1-B).

16. Dispositif selon l'une quelconque des revendications 9 à 15, **caractérisé en ce que** le troisième échangeur de chaleur (3-2) est agencé dans le deuxième dispositif de réaction (3) de telle sorte qu'il soit tout d'abord traversé par le gaz de synthèse **C** quittant le premier dispositif de réaction (1), avant que celui-ci n'entre dans le troisième lit catalytique (3-A), et de telle sorte qu'il soit de préférence traversé à contre-courant par le gaz de synthèse sortant du troisième lit catalytique (3-A), qui comprend un produit et des réactifs non réagis, après la sortie du troisième lit catalytique (3-A) et avant l'entrée dans le quatrième lit catalytique (3-B).

17. Dispositif selon l'une quelconque des revendications 9 à 16, **caractérisé en ce qu'**un premier échangeur de chaleur préliminaire (1-1) est prévu, afin de préchauffer le gaz de synthèse frais A.

18. Dispositif selon l'une quelconque des revendications 16 ou 17, **caractérisé en ce qu'**un deuxième échangeur de chaleur préliminaire (3-1) est prévu, afin de préchauffer le gaz de synthèse C ou D.
